# EUROPEAN PATENT SPECIFICATION

(11) **EP 3 170 118 B1**
(45) Date of publication and mention of the grant of the patent: **09.10.2019**
(21) Application number: 15742400.3
(22) Date of filing: 07.07.2015
(51) Int. Cl.: G06F 21/10, G06F 21/62, H04W 12/06, G06F 21/44, G06F 21/45, G06F 21/51

(54) **CONTROLLING THE PERFORMANCES OR ACCURACY OF HARDWARE RESOURCES DEPENDING ON APPLICATION AUTHENTICATION STATUS IN A HEAD MOUNTED DEVICE**
STEUERUNG DER LEISTUNGEN ODER GENAUIGKEIT VON HARDWARE-RESSOURCEN ABHÄNGIG VOM ANWENDUNGSAUTHENTIFIZIERUNGSSTATUS IN EINER KOPFMONTIERTEN VORRICHTUNG
CONTRÔLE DE LA PRÉCISION OU DES PERFORMANCES DE RESSOURCES DE MATÉRIEL EN FONCTION DE L'ÉTAT D'AUTHENTIFICATION D'APPLICATION DANS UN DISPOSITIF MONTÉ SUR LA TÊTE

(30) Priority: 17.07.2014 JP 2014146550
(43) Date of publication of application: 24.05.2017
(73) Proprietor: Seiko Epson Corporation, Tokyo 160-8801 (JP)
(72) Inventor: TORII, Shinya, Suwa-shi Nagano 392-8502 (JP)
(74) Representative: Miller Sturt Kenyon
(86) International application number: PCT/JP2015/003392
(87) International publication number: WO 2016/009609

(56) References cited:
- US-A1- 2010 024 045
- US-A1- 2013 227 641

## Description

### Technical Field

The present invention relates to an information processing device.

### Background Art

There has been known a head-mounted display device (head mounted display (HMD)) that is a display device mounted on a head. For example, the HMD generates image light, which represents an image, using a liquid crystal display and a light source and guides the generated image light to the eyes of a user using projection optical systems, light guide plates, and the like to thereby cause the user to recognize a virtual image. In such an HMD, applications operating on the HMD to execute predetermined processing have been provided by various developers. PTL 1 describes a technique for authenticating the validity of applications in an information processing device and causing the information processing device to start only an application successful in the authentication.

### Citation List

### Patent Literature

PTL 1: JP-A-2007-52618
US 2013/227641 discloses methods and systems relating to enhancing security on a device by enforcing one or more policies on the loading, linking, and/or executing of native code by one or more applications executing on the device.

US 2010/024045 discloses a method for accepting and enforcing user selectable privacy settings for context awareness including location awareness data on a computing platform. The method may identify a requestor, assign a privacy setting to the requester then detect a request for location information from the requestor. The method may transmit location information to the requester based on the user selected privacy setting. The user selected privacy setting may have a granularity assigned to each requestor based on a privacy preference and the method may entirely block the location information from being disclosed or the method may modify the granularity/accuracy of the location information based on the privacy setting to report context of an appropriate level of granularity according to the privacy setting configured by the user.

### Summary of Invention

### Technical Problem

There has been a demand to provide a difference in a degree of usability of a hardware resource of the HMD between, for example, a specific application such as an application provided by a reliable developer and another application for the purpose of differentiation of the applications. However, the technique described in PTL 1 only controls the propriety of a start of an application and does not take into account a hardware resource. Note that such a problem is not limited to the HMD and is a problem common to all information processing devices such as a personal computer and a smart phone.

### Solution to Problem

An advantage of some aspects of the invention is to provide an information processing device capable of providing a difference in a degree of usability of a hardware resource between a specific application and another application. Another advantage of some aspects of the invention is to achieve a reduction in size, a reduction in costs, resource saving, facilitation of manufacturing, improvement of usability, and the like for the information processing device.

The invention can be implemented as the following aspects.

An aspect of the invention provides an information processing device as defined in claim 1.

With the information processing device in this aspect, the authenticating unit authenticates the validity of the application. Therefore, it is possible to distinguish a "specific application" and "another application" through the authentication. The changing unit changes the degree of usability of the hardware resource by the application according to the result of the authentication. Therefore, it is possible to provide a difference in the degree of usability of the hardware resource between the specific application and the other application. For example, it is possible to implement a form in which the specific application is allowed to use the hardware resource of the information processing device and the other application is disallowed to use the hardware resource of the information processing device.

With the information processing device according to this aspect, the changing unit sets the performance of the hardware resource usable by the application when the authentication is successful higher than the performance of the hardware resource usable by the application when the authentication is unsuccessful. Therefore, it is possible to provide a difference in the degree of usability of the hardware resource between the specific application successful in the authentication and the other application unsuccessful in the authentication.

With the information processing device according to this aspect, the changing unit can easily change the performance of the hardware resource usable by the application by enabling the use of the singularity of the library among the plurality of libraries having the different functions.

According to this aspect, the changing unit can provide a difference in at least one of the accuracy of the hardware resource and the operation speed of the hardware resource between the specific application successful in the authentication and the other application unsuccessful in the authentication.

According to this aspect, the application transmits the name and the key to the authenticating unit. The authenticating unit generates the trial key through the arithmetic operation using the name received from the application and the authentication information stored in advance and authenticates the validity of the application using the generated trial key and the key received from the application. As a result, it is possible to conceal, in the authenticating unit, the authentication information used for the generation of the key. Therefore, it is possible to improve security in the authentication.

Preferably, the application may use the libraries via a single command irrespective of the library enabled to be used. Accordingly, the application can use the libraries via the single command irrespective of the library enabled to be used. Therefore, on the application side, it is unnecessary to be aware of the library enabled to be used. This contributes to facilitation of application development.

Alternatively, the application may use the libraries via different commands corresponding to the library enabled to be used. Accordingly, the application can use the libraries via the different commands corresponding to the library enabled to be used. Therefore, on the application side, it is necessary to be aware of the library enabled to be used. It is possible to enlighten an application developer to the effect that "there is a difference in the degree of usability of the hardware resource between the specific application and the other application".

Preferably, the authenticating unit may carry out the authentication during initialization of the application, and the changing unit may change the degree of usability of the hardware resource during the initialization of the application. Accordingly, processing in the authenticating unit and the changing unit is executed at a time during the initialization of the application. As a result, after the initialization ends, the application can freely use the hardware resource within a range of the degree of usability of the hardware resource.

Alternatively, the authenticating unit may carry out the authentication when the application uses the hardware resource, and the changing unit may change the degree of usability of the hardware resource when the application uses the hardware resource. Accordingly, the processing in the authenticating unit and the changing unit is executed when the application uses the hardware resource. As a result, the authenticating unit can authenticate the validity of the application every time the application uses the hardware resource.

Preferably, the information processing device further includes a software resource used by the application, and the changing unit may further change a degree of usability of the software resource by the application according to the result of the authentication. Accordingly, the changing unit changes the degree of usability of the software resource by the application according to the result of the authentication. Therefore, it is possible to provide a difference in the degree of usability of the software resource between the specific application successful in the authentication and the other application unsuccessful in the authentication. For example, it is possible to implement a form in which the specific application is allowed to use the software resource of the information processing device and the other application is disallowed to use the software resource of the information processing device. For example, the changing unit can set the performance of the software resource usable by the specific application higher than the performance of the software resource usable by the other application.

Preferably, the authentication information stored in the authenticating unit may include first authentication information and second authentication information, the key stored in the application may be generated using at least one of the first authentication information and the second authentication information, and the authenticating unit may authenticate presence or absence of the validity of the application and a level of the validity by respectively determining a first trial key generated using the received name and the first authentication information stored in advance and the received key and a second trial key generated using the received name and the second authentication information stored in advance and the received key. In this case the authenticating unit determines whether or not the first and second trial keys coincide with the received key. If the authenticating unit determines that the received key coincides with the first trial key then the application is determined to have a first level of validity, if the authenticating unit determines that the received key coincides with the second trial key then the application is determined to have a second level of validity, and if the authenticating unit determines that the received key coincides with neither the first trial key nor the second trial key then the application is determined not to be valid. Accordingly, the authenticating unit can authenticate the presence or absence of the validity of the application and the level of the validity using the first authentication information and the second authentication information. As a result, the authenticating unit can not only distinguish the "specific application" and the "other application" but also distinguish a "first specific application", a "second specific application", and the "other application" through the authentication.

Another aspect of the invention provides a method as defined in claim 8.

Another aspect of the invention provides a computer program as defined in claim 9.

Another aspect of the invention provides an information processing system as defined in claim 10.

With the information processing system in this aspect, the server apparatus can integrate the key for authenticating the validity of the application and the development program for supporting the development of the application and provide the client apparatus with the key and the development program. As a result, it is possible to facilitate the application to store the key in advance.

### Brief Description of Drawings

Fig. 1 is an explanatory diagram showing the schematic configuration of an information processing device in an embodiment of the invention.
Fig. 2 is a block diagram functionally showing the configuration of an HMD functioning as the information processing device.
Fig. 3 is an explanatory diagram showing an example of a virtual image visually recognized by a user.
Fig. 4 is an explanatory diagram of a platform of the HMD functioning as the information processing device.
Fig. 5 is an explanatory diagram showing one library including a plurality of libraries.
Fig. 6 is an explanatory diagram showing a procedure of changing processing.
Fig. 7 is an explanatory diagram showing a procedure of changing processing in a variation 1.
Fig. 8 is an explanatory diagram showing a procedure of changing processing in a variation 2.
Fig. 9 is an explanatory diagram showing a procedure of changing processing in a variation 3.
Fig. 10 is an explanatory diagram showing a procedure of authentication processing.
Fig. 11 is an explanatory diagram showing a procedure of authentication processing in a variation.
Fig. 12 is a sequence chart showing a processing procedure in a second embodiment.
Fig. 13 is a block diagram functionally showing the configuration of an SDK providing server.
Fig. 14A is an explanatory diagram showing the external configurations of HMDs in modifications.
Fig. 14B is an explanatory diagrams showing the external configurations of HMDs in modifications.

### Description of Embodiments

### A. First embodiment

### A-1. Configuration of an information processing device

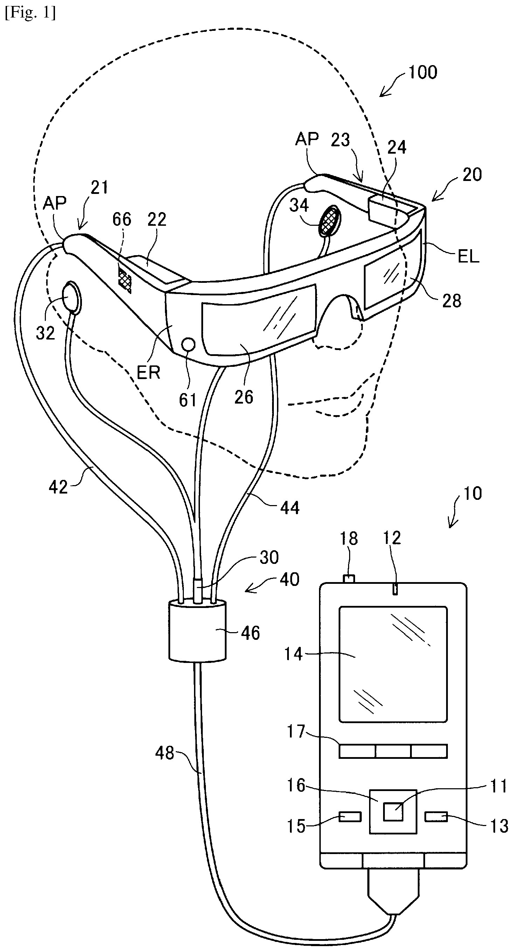

Fig. 1 is an explanatory diagram showing the schematic configuration of an information processing device in an embodiment of the invention. An information processing device 100 in this embodiment is a head-mounted display device mounted on a head and is also called head mounted display (HMD). The HMD 100 is a head mounted display of an optical transmission type with which a user is capable of directly visually recognizing an outside scene simultaneously with visually recognizing a virtual image. The HMD 100 in this embodiment can authenticate, concerning various applications installed in the HMD 100 and operating on the HMD 100, the validity (i.e., presence or absence of authority) of the applications and change a degree of usability of a hardware resource by the applications according to a result of the authentication by executing authentication processing and changing processing explained below. The "degree of usability of the hardware resource" includes both of indication whether the hardware resource can be used and the performance of the usable hardware resource. In the case of the former, an application, the validity of which can be confirmed, (having authority) can use the hardware resource. An application, the validity of which cannot be confirmed, (not having authority) cannot use the hardware resource. In the case of the latter, the application, the validity of which can be confirmed, can use the hardware resource with higher performance compared with the application, the validity of which cannot be confirmed. The performance of the application, the validity of which cannot be confirmed, is low, although the application can be used the hardware resource.

The HMD 100 includes an image display unit 20 that causes the user to visually recognize a virtual image in a state in which the image display unit 20 is worn on the head of the user and a control unit 10 (a controller 10) that controls the image display unit 20. Note that, in the following explanation, for convenience, the virtual image visually recognized by the user using the HMD 100 is also referred to as "displayed image". Emitting image light generated on the basis of image data using the HMD 100 is also referred to as "display an image".

### A-1-1. Configuration of the image display unit

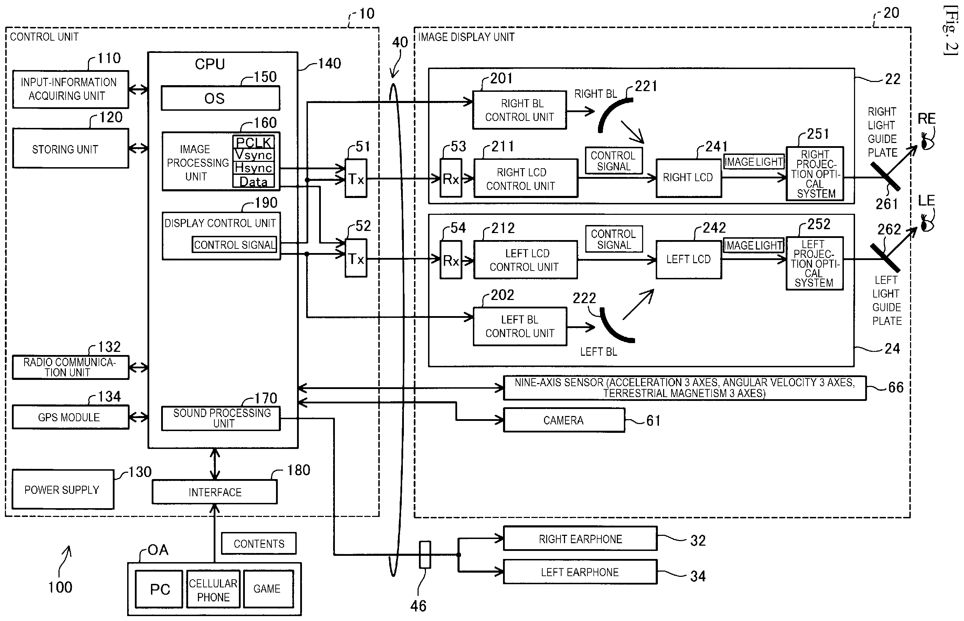

Fig. 2 is a block diagram functionally showing the configuration of the HMD 100 functioning as the information processing device. As shown in Fig. 1, the image display unit 20 is a wearing body worn on the head of the user. In this embodiment, the image display unit 20 has an eyeglass shape. The image display unit 20 includes a right holding unit 21, a right display driving unit 22, a left holding unit 23, a left display driving unit 24, a right optical-image display unit 26, a left optical-image display unit 28, a camera 61, and a nine-axis sensor 66. In the following explanation, positional relations and functions of units of the image display unit 20 in a state in which the user wears the image display unit 20 are explained.

As shown in Fig. 1, the right optical-image display unit 26 and the left optical-image display unit 28 are respectively disposed to be located in front of the right and left eyes of the user. One end of the right optical-image display unit 26 and one end of the left optical-image display unit 28 are connected to each other in a position corresponding to the middle of the forehead of the user. As shown in Fig. 2, the right optical-image display unit 26 includes a right light guide plate 261 and a dimming plate (not shown in the figure). The right light guide plate 261 is formed of a light transmissive resin material or the like. The right light guide plate 261 guides image light output from the right display driving unit 22 to a right eye RE of the user while reflecting the image light along a predetermined optical path. The dimming plate is a thin plate-like optical element and is disposed to cover the front side of the image display unit 20 (a side opposite to the side of the eyes of the user). The dimming plate protects the light guide plate 261 and suppresses damage, adhesion of soil, and the like to the light guide plate 261. By adjusting the light transmittance of the dimming plate, it is possible to adjust an external light amount entering the eyes of the user and adjust easiness of visual recognition of the virtual image. Note that the dimming plate can be omitted.

The left optical-image display unit 28 includes a left light guide plate 262 and a dimming plate (not shown in the figure). Details of the left light guide plate 262 and the dimming plate are the same as those in the right optical-image display unit 26. Note that the right optical-image display unit 26 and the left optical-image display unit 28 are collectively simply referred to as "optical-image display units" as well. As the optical-image display units, any system can be used as long as the optical-image display units form a virtual image in front of the eyes of the user by using image light. For example, the optical-image display units may be implemented using a diffraction grating or may be implemented using a transflective film.

As shown in Fig. 1, the right holding unit 21 is provided to extend from the other end ER of the right optical-image display unit 26 to a position corresponding to the temporal region of the user. The left holding unit 23 is provided to extend from the other end EL of the left optical-image display unit 28 to a position corresponding to the temporal region of the user. The right holding unit 21 and the left holding unit 23 hold the image display unit 20 on the head of the user like temples of eyeglasses. Note that the right holding unit 21 and the left holding unit 23 are collectively simply referred to as "holding units" as well.

As shown in Fig. 1, the right display driving unit 22 is disposed on the inner side of the right holding unit 21 (a side opposed to the head of the user). The left display driving unit 24 is disposed on the inner side of the left holding unit 23. As shown in Fig. 2, the right display driving unit 22 includes a receiving unit (Rx) 53, a right backlight (BL) control unit 201 and a right backlight (BL) 221 functioning as a light source, a right LCD (liquid crystal display) control unit 211 and a right LCD 241 functioning as a display element, and a right projection optical system 251. Note that the right backlight control unit 201, the right LCD control unit 211, the right backlight 221, and the right LCD 241 are collectively referred to as "image-light generating unit" as well. The receiving unit 53 functions as a receiver for serial transmission between the control unit 10 and the image display unit 20. The right backlight control unit 201 drives the right backlight 221 on the basis of an input control signal. The right backlight 221 is, for example, a light emitting body such as an LED (Light Emitting Diode) or an electroluminescence (EL) element. The right LCD control unit 211 drives the right LCD 241 on the basis of a clock signal PCLK, a vertical synchronization signal VSync, a horizontal synchronization signal HSync, and image data for right eye Data1 input via the receiving unit 53. The right LCD 241 is a transmissive liquid crystal panel on which a plurality of pixels are disposed in a matrix shape. The right projection optical system 251 is a collimate lens that changes image light emitted from the right LCD 241 to light beams in a parallel state.

The left display driving unit 24 includes a receiving unit (Rx) 54, a left backlight (BL) control unit 202 and a left backlight (BL) 222 functioning as a light source, a left LCD control unit 212 and a left LCD 242 functioning as a display element, and a left projection optical system 252. Details of the receiving unit (Rx) 54, the left backlight (BL) control unit 202, the left backlight (BL) 222, the left LCD control unit 212, the left LCD 242 are the same as those in the right display driving unit 22, and the left projection optical system 252. Note that the right display driving unit 22 and the left display driving unit 24 are collectively simply referred to as "display driving units" as well.

The camera 61 is disposed in a position corresponding to the outer corner of the right eye of the user. The camera 61 picks up an image of an outside scene (a scene on the outside) in the front side direction of the image display unit 20, in other words, a visual field direction of the user in a state in which the head mounted display 100 is mounted and acquires an outside scene image. The camera 61 is a so-called visible light camera. The outside scene image acquired by the camera 61 is an image representing the shape of an object from visible light radiated from the object. The camera 61 in this embodiment is a monocular camera but may be a stereo camera.

The nine-axis sensor 66 is disposed in a position corresponding to the right temple of the user. The nine-axis sensor 66 is a motion sensor that detects acceleration (three axes), angular velocity (three axes), and terrestrial magnetism (three axes). The nine-axis sensor 66 is provided in the image display unit 20. Therefore, when the image display unit 20 is worn on the head, the nine-axis sensor 66 functions as a "motion detecting unit" that detects motion of the head. The motion of the head includes the velocity, the acceleration, the angular velocity, the direction, and a change in the direction of the head.

As shown in Fig. 1, the image display unit 20 includes a connecting unit 40 for connecting the image display unit 20 to the control unit 10. The connecting unit 40 includes a main body cord 48 connected to the control unit 10, a right cord 42 and a left cord 44, which are two cords branching from the main body cord 48, and a coupling member 46 provided at a branching point. The right cord 42 is connected to the right display driving unit 22. The left cord 44 is connected to the left display driving unit 24. A jack for connecting an earphone plug 30 is provided in the coupling member 46. A right earphone 32 and a left earphone 34 extend from the earphone plug 30. A connector (not shown in the figure) is provided at an end portion of the main body cord 48 on the opposite side of the coupling member 46 and in the control unit 10. The connector is fit with and unfitted from a connector (not shown in the figure) provided in the control unit 10 to implement connection and disconnection of the control unit 10 and the image display unit 20. The image display unit 20 and the control unit 10 perform transmission of various signals via the connecting unit 40. For example, a metal cable or an optical fiber can be adopted as the right cord 42, the left cord 44, and the main body cord 48.

### A-1-2. Configuration of the control unit

As shown in Fig. 1, the control unit 10 is a device for controlling the HMD 100. The control unit 10 includes a determination key 11, a lighting unit 12, a display switching key 13, a track pad 14, a luminance switching key 15, a direction key 16, a menu key 17, and a power switch 18. The determination key 11 detects pressing operation and outputs a signal for determining contents of the operation in the control unit 10. The lighting unit 12 is implemented by, for example, an LED. The lighting unit 12 notifies, with a light emission state thereof, an operation state (e.g., ON/OFF of a power supply) of the HMD 100. The display switching key 13 detects pressing operation and outputs, for example, a signal for switching a display mode of a content moving image to 3D and 2D. The track pad 14 detects operation by a finger of the user on an operation surface of the track pad 14 and outputs a signal corresponding to detected content. As the track pad 14, various types such as an electrostatic type, a pressure detection type, and an optical type can be adopted. The luminance switching key 15 detects pressing operation and outputs a signal for increasing or reducing the luminance of the image display unit 20. The direction key 16 detects pressing operation on keys corresponding to the up, down, left, and right directions and outputs a signal corresponding to detected content. The power switch 18 detects slide operation of the switch to switch a power supply state of the HMD 100.

As shown in Fig. 2, the control unit 10 includes an input-information acquiring unit 110, a storing unit 120, a power supply 130, a radio communication unit 132, a GPS module 134, a CPU 140, an interface 180, and transmitting units (Tx) 51 and 52. The units are connected to one another by a not-shown bus.

The input-information acquiring unit 110 acquires signals corresponding to operation inputs to the determination key 11, the display switching key 13, the track pad 14, the luminance switching key 15, the direction key 16, the menu key 17, and the power switch 18. Note that the input-information acquiring unit 110 can acquire operation inputs by various methods other than the operation inputs explained above. For example, the input-information acquiring unit 110 may acquire an operation input by a foot switch (a switch operated by the foot of the user). For example, the input-information acquiring unit 110 may acquire an operation input by a command associated with a visual line of the user detected by the visual-line detecting unit 62 or the movement of the eyes of the user. The command may be set to be capable of being added by the user. For example, the input-information acquiring unit 110 may detect a gesture of the user using a camera that photographs an image in the visual field direction of the user and acquire an operation input by a command associated with the gesture. In the gesture detection, a fingertip of the user, a ring worn on the hand of the user, a medical instrument held by the user, or the like can be used as a mark for motion detection. If the operation input by the foot switch or the visual line can be acquired, even in work in which it is difficult for the user to release the hands, the input-information acquiring unit 110 can acquire the operation input from the user.

The storing unit 120 is configured by a ROM, a RAM, a DRAM, a hard disk, or the like. Various computer programs such as an operating system (OS) are stored in the storing unit 120.

The power supply 130 supplies electric power to the units of the HMD 100. As the power supply 130, for example, a secondary cell can be used.

The radio communication unit 132 performs radio communication with an external apparatus according to a predetermined radio communication standard. The predetermined radio communication standard is, for example, a short-range radio communication illustrated by infrared communication and a Bluetooth (registered trademark) and a wireless LAN illustrated by IEEE802.11.

The GPS module 134 receives a signal from a GPS satellite to thereby detect the present position of the user of the HMD 100 and generates present position information representing the present position of the user. The present position information can be implemented by, for example, coordinates representing latitude and longitude.

The CPU 140 reads out and executes a computer program stored in the storing unit 120 to thereby function as an OS 150, an image processing unit 160, a sound processing unit 170, and a display control unit 190.

The image processing unit 160 generates a signal on the basis of contents (a video) input via the interface 180 or the radio communication unit 132. For example, when the contents are contents of a digital format, the image processing unit 160 generates the clock signal PCLK and image data Data. Note that, in the case of the digital format, since the clock signal PCLK is output in synchronization with an image signal, generation of the vertical synchronization signal VSync and the horizontal synchronization single HSync and A/D conversion of an analog image signal are unnecessary. The image processing unit 160 transmits the generated clock signal PCLK, the vertical synchronization signal VSync, the horizontal synchronization signal HSync, and the image data Data stored in the DRAM in the storing unit 120 to the image display unit 20 via the transmitting units 51 and 52. The image data Data transmitted via the transmitting unit 51 is referred to as "image data for right eye Data1" as well. The image data Data transmitted via the transmitting unit 52 is referred to as "image data for left eye Data2" as well. Note that the image processing unit 160 may execute, on the image data Data stored in the storing unit 120, image processing such as resolution conversion processing, various kinds of tone correction processing for adjustment of luminance and chroma, and keystone correction processing.

The display control unit 190 generates control signals for controlling the right display driving unit 22 and the left display driving unit 24. Specifically, the display control unit 190 individually controls, using the control signals, ON/OFF of driving of the right and left LCDs 241 and 242 by the right and left LCD control units 211 and 212 and ON/OFF of driving of the right and left backlights 221 and 222 by the right and left backlight control units 201 and 202 to thereby control generation and emission of image lights by the right display driving unit 22 and the left display driving unit 24. The display control unit 190 transmits the control signals to the image display unit 20 via the transmitting units 51 and 52.

The sound processing unit 170 acquires a sound signal included in the contents, amplifies the acquired sound signal, and supplies the amplified sound signal to a not-shown speaker in the right earphone 32 or a not-shown speaker in the left earphone 34.

The interface 180 performs communication with an external apparatus OA according to a predetermined wired communication standard. The predetermined wired communication standard is, for example, MircroUSB (Universal Serial Bus), USB, HDMI (High Definition Multimedia Interface; HDMI is a registered trademark), DVI (Digital Visual Interface), VGA (Video Graphics Array), composite, RS-232C (Recommended Standard 232), and a wired LAN represented by IEEE802.3. As the external apparatus OA, for example, a personal computer PC, a cellular phone terminal, and a game terminal can be used.

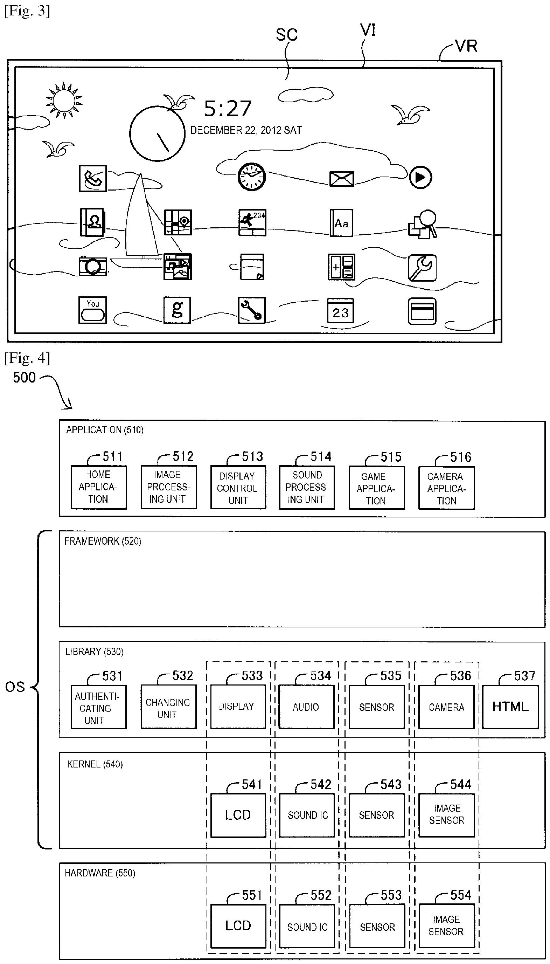

Fig. 3 is an explanatory diagram showing an example of a virtual image visually recognized by the user. The image light guided to both the eyes of the user of the HMD 100 is focused on the retinas of the user as explained above, whereby the user visually recognizes a virtual image VI. In the example shown in the figure, the virtual image VI is a standby screen of the OS 150 of the HMD 100. The user visually recognizes an outside scene SC through the right optical-image display unit 26 and the left optical-image display unit 28. In this way, in a portion where the virtual image VI is displayed in a visual field VR, the user of the HMD 100 in this embodiment can view the virtual image VI and the outside scene SC behind the virtual image VI. In a portion where the virtual image VI is not displayed in the visual field VR, the user can directly view the outside scene SC through the optical-image display units.

### A-2. Platform of the information processing device

Fig. 4 is an explanatory diagram of a platform of the HMD 100 functioning as the information processing device. The platform is a set of a hardware resource, an OS, middleware, and the like functioning as a base necessary for operating applications installed in the HMD 100. A platform 500 in this embodiment includes an application layer 510, a framework layer 520, a library layer 530, a kernel layer 540, and a hardware layer 550. The layers 510 to 530 conceptually divide the hardware resource, the OS, the middleware, and the like included in the platform 500 into layers. Functions of the OS 150 (Fig. 2) are implemented by the framework layer 520, the library layer 530, and the kernel layer 540. Note that, in Fig. 4, components unnecessary for explanation are not shown.

The application layer 510 is a set of application software for executing predetermined processing on the OS 150. The respective kinds of application software included in the application layer 510 are hereinafter referred to as "applications" as well. The application layer 510 includes both of applications installed in the HMD 100 in advance and applications installed by the user of the HMD 100.

In the example shown in Fig. 4, the application layer 510 includes a home application 511, an image processing unit application 512, a display control unit application 513, a sound processing unit application 514, a game application 515, and a camera application 516. The home application 511 provides a home screen of the HMD 100. The image processing unit application 512 implements a function of the image processing unit 160 (Fig. 2). The display control unit application 513 implements a function of the display control unit 190 (Fig. 2). The sound processing unit application 514 implements a function of the sound processing unit 170 (Fig. 2). The game application 515 provides a game function. The camera application 516 provides a camera function.

The framework layer 520 is a basic program structure common to the application software of the application layer 510 and a set of programs implemented with function sets. In this embodiment, illustration of elements included in the framework layer 520 is omitted.

The library layer 530 is a set of library software obtained by converting programs for implementing specific functions into components such that other programs (e.g., the applications of the application layer 510) can use the programs. The respective kinds of library software included in the library layer 530 are hereinafter referred to as "libraries" as well. The libraries cannot be independently executed and are executed by being invoked by the other programs.

In the example shown in Fig. 4, the library layer 530 includes an authenticating unit library 531, a changing unit library 532, a display library 533, an audio library 534, a sensor library 535, a camera library 536, and an HTML (Hyper Text Markup Language) library 537. The authenticating unit library 531 executes authentication processing for authenticating the validity of the applications of the application layer 510. In the following explanation, the authenticating unit library 531 is simply referred to as "authenticating unit 531" as well. The changing unit library 532 executes, according to a result of the authentication processing, changing processing for changing a degree of usability of a hardware resource (details are explained below) by the applications. In the following explanation, the changing unit library 532 is simply referred to as "changing unit 532" as well. The display library 533 drives the right LCD 241 and the left LCD 242 (Fig. 2). The audio library 534 drives sound ICs (Integrated Circuits) incorporated in the right earphone 32 and the left earphone 34 (Fig. 2). The sensor library 535 drives the nine-axis sensor 66 (Fig. 2), acquires a detection value by the nine-axis sensor 66, and processes the detection value into information to be provided to the applications. The camera library 536 drives the camera 61 (Fig. 2), acquires a detection value by the camera 61, and generates an outside scene image from the detection value. The HTML library 537 interprets data described in a Webpage description language and calculates arrangement of characters and images for screen display.

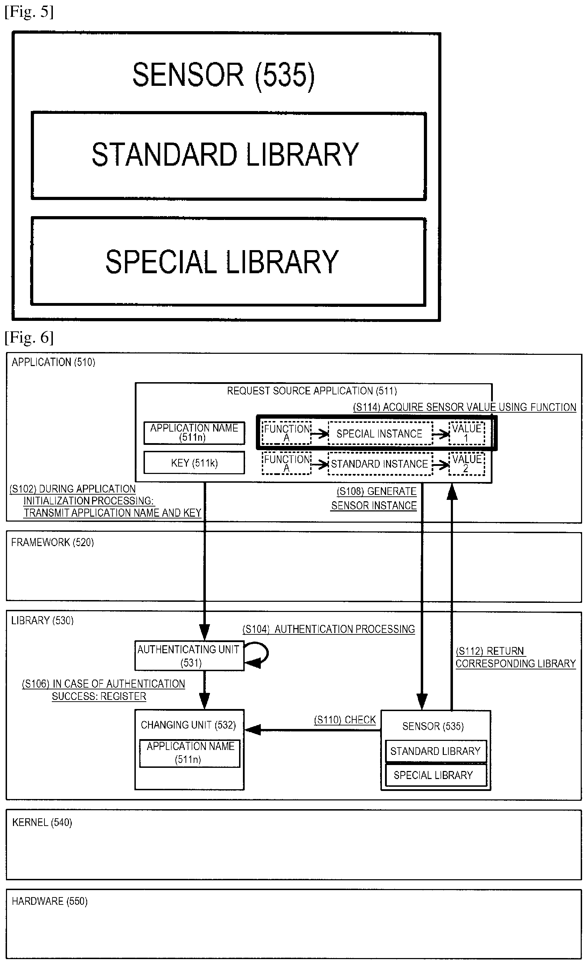

Fig. 5 is an explanatory diagram of one library including a plurality of libraries. Among the libraries included in the library layer 530, there is one library including a plurality of libraries (a plurality of kinds of library software) in a layer structure as shown in Fig. 5. In the example shown in Fig. 5, the sensor library 535 includes two kinds of libraries, i.e., a standard library and a special library. The standard library is a library including a standard function. The standard library drives the nine-axis sensor 66 at first speed and acquires a detection value of the nine-axis sensor 66 at first accuracy. The special library is a library including a function more excellent than the standard library. The special library drives the nine-axis sensor 66 at second speed higher than the first speed and acquires a detection value by the nine-axis sensor 66 at second accuracy higher than the first accuracy. Thereafter, the standard library and the special library perform calculation of the acquired detection value (e.g., data correction) according to necessity. When the sensor library 535 is used by the applications, any one of the two kinds of libraries is used. Note that the sensor library 535 is illustrated. However, concerning the other libraries, one library may include a plurality of libraries.

The kernel layer 540 shown in Fig. 4 is a set of programs implemented with a basis function of the OS 150. The kernel layer 540 manages exchange between the software (the library layer 530) and the hardware (the hardware layer 550) and functions as a bridge between the software and the hardware.

In the example shown in Fig. 4, the kernel layer 540 includes an LCD driver 541 for the right LCD 241 and the left LCD 242, a sound IC driver 542 for the sound ICs, a sensor driver 543 for the nine-axis sensor 66, and an image sensor driver 544 for an image sensor incorporated in the camera 61.

The hardware layer 550 is an actual hardware resource incorporated in the HMD 100. In this embodiment, "hardware resource" means devices connected to the HMD 100 and incorporated in the HMD 100. That is, the hardware resource includes both of devices internally connected to a motherboard of the HMD 100 (e.g., a sensor device of the nine-axis sensor 66, an image sensor device of the camera 61, and a sensor device of the track pad 14) and devices externally connected to the HMD 100 via the interface 180 (e.g., an external motion sensor device and an external attached USB device).

In the example shown in Fig. 4, the hardware layer 550 includes an LCD device 551 functioning as the right LCD 241 and the left LCD 242, a sound IC device 552, a sensor device 553 for the nine-axis sensor 66, and an image sensor device 554 for the camera 61.

In Fig. 4, the libraries, the drivers, and the devices surrounded by broken lines are respectively in correspondence relations and operate in cooperation with one another. For example, any one of the standard library and the special library of the sensor library 535 (Fig. 5), the sensor driver 543, and the sensor device 553 operate in cooperation with one another in order to implement a function of the nine-axis sensor 66. That is, applications of the sensor library 535 of the library layer 530 and the sensor driver 543 of the kernel layer 540 can be considered programs (software) for using the sensor device 553 functioning as a hardware resource (the hardware layer 550). In order to enable use of the sensor device 553 functioning as one hardware resource, as explained with reference to Fig. 5, the plurality of libraries (the standard library and the special library) are sometimes allocated to the sensor device 553.

On the other hand, in Fig. 4, for example, the HTML library 537 of the library layer 530 is not in a correspondence relation with a hardware resource and does not depend on a hardware resource. A program (software) incorporated in the HMD 100 and not depending on a hardware resource in this way is referred to as "software resource" in this embodiment. As the software resource, various programs included in the respective layers of the framework layer 520, the library layer 530, and the kernel layer 540 are assumed. Note that, concerning software resources, as shown in Fig. 5, a plurality of libraries (a plurality of kinds of library software) may be included in one library.

### A-3. Changing processing

Fig. 6 is an explanatory diagram showing a procedure of changing processing. The changing processing is processing for changing, according to a result of authentication processing for an application, a degree of usability of a hardware resource by the application. In this embodiment, all applications included in the application layer 510 and about to use the hardware resource are targets of the changing processing. In the following explanation, as an application about to use the hardware resource, the home application 511 is illustrated. The home application 511 is referred to as "request source application 511". As a hardware resource that the request source application 511 is about to use, the sensor device 553 of the nine-axis sensor 66 is illustrated. Note that, in Fig. 6, components unnecessary in explanation are not shown.

In step S102, the request source application 511 transmits an application name 511n and a key 511k to the authenticating unit 531 as a part of initialization processing of the request source application 511. The "application name" is a name given in order to uniquely identify an application. The application name is given by an application developer and stored in the application. The "key" is a key used for authenticating the validity of the application. The key is provided from a provider of the platform 500 to the application developer and stored in the application.

In step S104, the authenticating unit 531, which receives the application name 511n and the key 511k, executes authentication processing for authenticating the validity of the request source application 511. Details of the authentication processing are explained below.

In step S106, when the authentication of the request source application 511 is successful, in other words, when the validity of the request source application 511 can be confirmed, the authenticating unit 531 registers the application name 511n in the changing unit 532 (causes the changing unit 532 to store the application name 511n). On the other hand, when the authentication of the request source application 511 is unsuccessful, in other words, the validity of the request source application 511 cannot be confirmed, the authenticating unit 531 does nothing. Note that, when the authentication of the request source application 511 is unsuccessful, the authenticating unit 531 may return an error message "authentication is unsuccessful" to the request source application 511.

In step S108, the request source application 511 generates an instance of the library (the sensor library 535) corresponding to the hardware resource (the sensor device 553) that the request source application 511 is about to use. For the generation of the instance, the request source application 511 requests the sensor library 535 to provide a library. Note that the "generation of the instance" means changing the library to a usable state in the application by performing allocation of a physical memory, exchange of a variable, and the like.

In step S110, the library (the sensor library 535), which acquires the request from the request source application 511, checks whether the request source application 511 is an application successful in the authentication. In this embodiment, when an application name is stored in the changing unit 532, the application is an application successful in the authentication. On the other hand, when an application name is not stored in the changing unit 532, the application is an application unsuccessful in the authentication or an unauthorized application not authenticated. Therefore, the sensor library 535 can check, by referring to the changing unit 532, whether the request source application 511 is an application successful in the authentication.

In step S112, the library (the sensor library 535) returns a corresponding library to the request source application 511 according to a result of the authentication of the request source application 511 checked in step S110. Specifically, when the request source application 511 is an application successful in the authentication (the result of the authentication: successful), the sensor library 535 returns the special library to the request source application 511. When the request source application 511 is an application unsuccessful in the authentication (the result of the authentication: unsuccessful) or when the request source application 511 is an application not authenticated (the result of the authentication: unsuccessful), the sensor library 535 returns the standard library to the request source application 511.

Through steps S108 to S112 explained above, an instance based on any one of the standard library and the special library of the sensor library 535 is generated on the inside of the request source application 511. In the following explanation, the instance generated on the basis of the standard library is referred to as "standard instance" as well and the instance generated on the basis of the special library is referred to as "special instance" as well. In Fig. 6, for convenience of explanation, both of the standard instance and the special instance are shown.

In step S114, the request source application 511 issues a command called "function" via the instance generated through the steps S108 to S112 to thereby use the hardware resource (the sensor device 553). In the example shown in Fig. 6, a function used by the request source application 511 in the standard instance and a function used by the request source application 511 in the special instance are the same function A. However, as explained with reference to Fig. 5, the standard library, which is the source of the standard instance, acquires a detection value of the nine-axis sensor 66 at the first accuracy and the special library, which is the source of the special instance, acquires a detection value of the nine-axis sensor 66 at second accuracy (accuracy higher than the first accuracy). Therefore, even when the same function A is used, obtained values are different when the function A is issued via the standard instance and when the function A is issued via the special instance.

As explained above, according to the changing processing in the first embodiment (Fig. 6), the changing unit 532 changes, according to the result of the authentication (step S104), a degree of usability of the hardware resource by the request source application 511 (steps S108 to S112). Specifically, the changing unit 532 sets the performance of the hardware resource that the request source application 511 can use when the authentication is successful higher than the performance of the hardware resource that the request source application 511 can use when the authentication is unsuccessful. Therefore, it is possible to provide a difference in the degree of usability of the hardware resource between the specific application successful in the authentication and the other application unsuccessful in the authentication.

Further, according to step S112 of the changing processing in the first embodiment, the changing unit 532 returns one library corresponding to the result of the authentication of the plurality of libraries (i.e., the standard library and the special library) having the different functions to the request source application 511 to enable the request source application 511 to use the one library. Therefore, the changing unit 532 can easily change the performance of the hardware resource that the request source application 511 can use.

Further, according to step S114 of the changing processing in the first embodiment, the request source application 511 can use libraries via a single command (i.e., the function A) irrespective of the library (the standard library or the special library) enabled to be used. Therefore, on the request source application 511 side, it is unnecessary to be aware of a library enabled to be used. This contributes to facilitation of application development.

Further, according to the changing processing in the first embodiment, the changing processing is executed at a time during the initialization of the request source application 511. As a result, after the initialization ends, the request source application 511 can freely use the hardware resource within a range of the degree of usability of the hardware resource. According to the changing processing in the first embodiment, the standard library drives the nine-axis sensor 66 at the first speed and acquires a detection value by the nine-axis sensor 66 at the first accuracy. The special library drives the nine-axis sensor 66 at the second speed higher than the first speed and acquires a detection value by the nine-axis sensor 66 at the second accuracy higher than the first accuracy. Note that one of the first and second speeds and the first and second accuracies may be the same. Note that the "speed" can include all performances concerning speed such as start speed, detection speed, operation speed, calculation speed, rendering speed, acquisition speed, and reproduction speed of the hardware resource. The "accuracy" can include all performances concerning accuracy such as detection accuracy, operation accuracy, calculation accuracy, rendering accuracy, acquisition accuracy, and reproduction accuracy. A difference in performance may be present between the standard library and the special library other than the speed and the accuracy. In this case, for example, the performance may be the number of pixels in driving the LCD and the camera. Consequently, the changing unit 532 can provide a difference in at least one of the accuracy of the hardware resource and the operation speed of the hardware resource between a specific application successful in the authentication and another application unsuccessful in the authentication.

### A-4. Variations of the changing processing

The changing processing explained above may be varied as explained below. Variations explained below may be independently applied or may be applied in combination.

### A-4-1: Variation 1

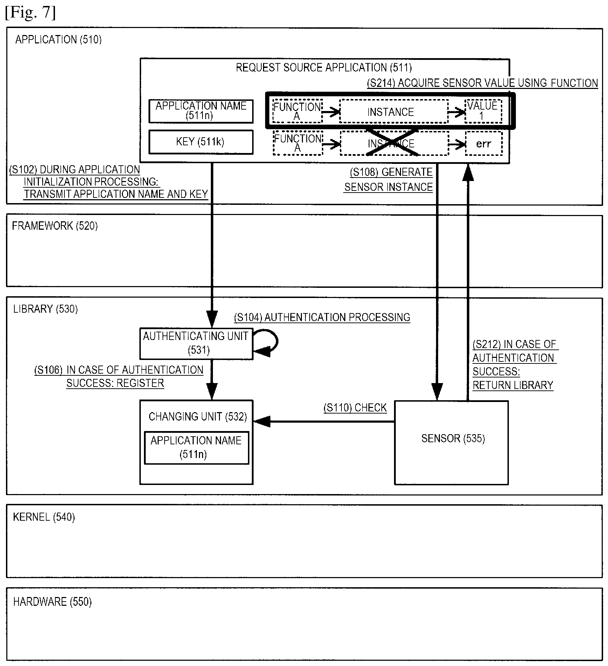

Fig. 7 is an explanatory diagram showing a procedure of changing processing in a variation 1. In the changing processing in the variation 1, the request source application 511 unsuccessful in the authentication is disallowed to use the hardware resource. The changing processing is different from the changing processing shown in Fig. 6 in that the changing processing includes step S212 instead of step S112 and includes step S214 instead of step S114 and the sensor library 535 does not include a plurality of libraries.

In step S212, when the request source application 511 is an application successful in the authentication (the result of the authentication: successful), the library (the sensor library 535) returns the sensor library 535 to the request source application 511. When the request source application 511 is an application unsuccessful in the authentication (the authentication result: unsuccessful) or when the request source application 511 is an application not authenticated (the result of the authentication: unsuccessful), the sensor library 535 does nothing.

An instance based on the sensor library 535 is generated on the inside of the request source application 511 successful in the authentication via steps S108, S110, and S212. On the other hand, an instance based on the sensor library 535 is not generated on the inside of the request source application 511 unsuccessful in the authentication.

In step S214, the request source application 511 issues the function A via the instance generated via steps S108, S110, and S212. The request source application 511 successful in the authentication can obtain a value according to the issuance of the function A. However, the request source application 511 unsuccessful in the authentication returns an error message (err) according to the issuance of the function A.

As explained above, according to the variation 1 of the changing processing (Fig. 7), the changing unit 532 can implement a form in which, according to the result of the authentication (step S104), the specific application successful in the authentication is allowed to use the hardware resource of the HMD 100 (information processing device) and the other application unsuccessful in the authentication is disallowed to use the hardware resource of the HMD 100.

### A-4-2. Variation 2

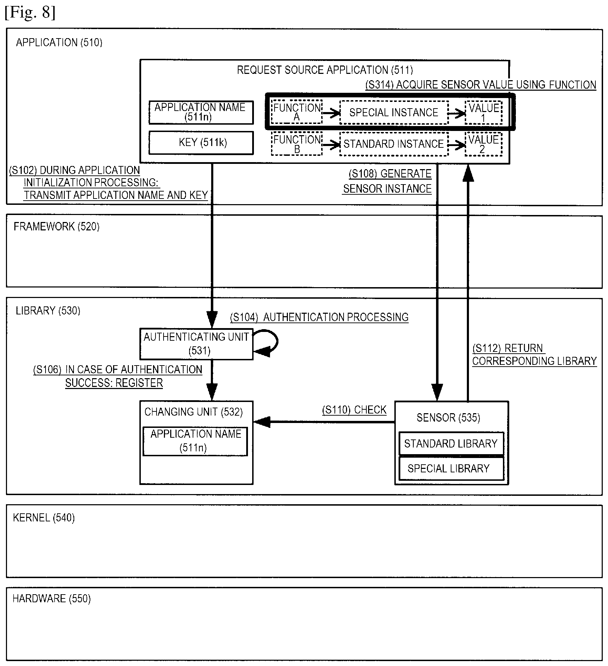

Fig. 8 is an explanatory diagram showing a procedure of changing processing in a variation 2. In the changing processing in the variation 2, the request source application 511 uses a plurality of functions. The changing processing is different from the changing processing shown in Fig. 6 in that the changing processing includes step S314 instead of step S114.

In step S314, the request source application 511 issues a function via the instance generated via steps S108 to S112 to use the hardware resource. In an example shown in Fig. 8, the function A used in the special instance and a function B used in the standard instance by the request source application 511 are respectively different from the function A used in the special instance and the standard instance in the embodiment. For example, when the request source application 511 issues the function B (a function for the standard instance) via the special instance and when the request source application 511 issues the function A (the function for the special instance) via the standard instance, an error message is returned to the request source application 511.

As explained above, according to the variation 2 of the changing processing (Fig. 8), the request source application 511 can use the libraries via different commands (the function B and the function A) corresponding to the libraries (the standard library and the special library) enabled to be used. Therefore, on the request source application 511 side, it is necessary to be aware of the libraries enabled to be used. It is possible to enlighten an application developer to the effect that "there is a difference in the degree of usability of the hardware resource between the specific application successful in the authentication and the other application unsuccessful in the authentication".

### A-4-3. Variation 3

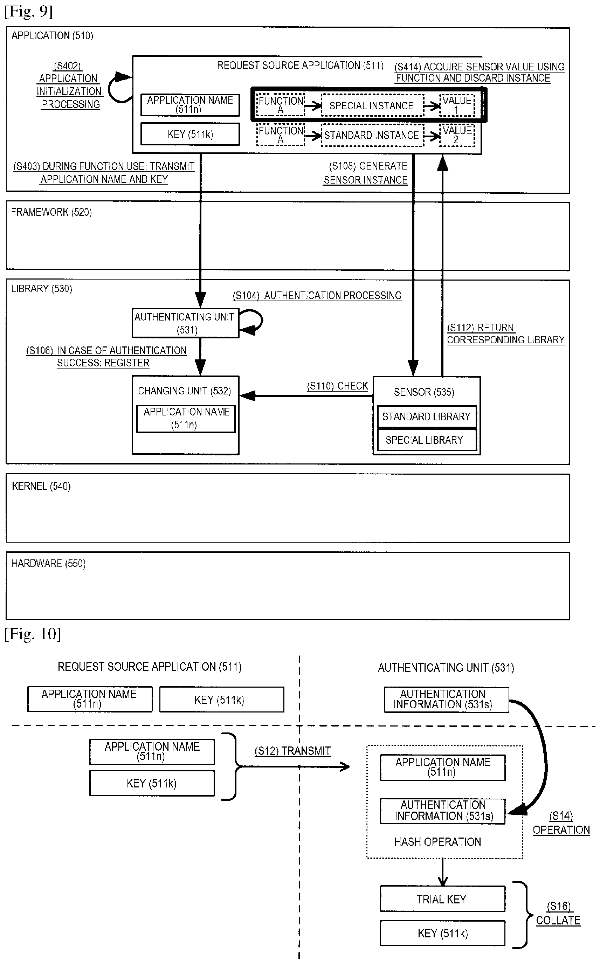

Fig. 9 is an explanatory diagram showing a procedure of changing processing in a variation 3. In the changing processing in the variation 3, the validity of the request source application 511 is authenticated every time the request source application 511 uses the hardware resource. The changing processing is different from the changing processing shown in Fig. 6 in that the changing processing includes steps S402 and S403 instead of the step S102 and includes step S414 instead of step S114.

In step S402, the request source application 511 performs initialization processing for the request source application 511. In this case, the request source application 511 does not generate an instance of the library (the sensor library 535) corresponding to the hardware resource (the sensor device 553) that the request source application 511 is about to use.

In step S403, when the request source application 511 uses the hardware resource (the sensor device 553), in other words, when the request source application 511 issues a function, the request source application 511 transmits the application name 511n and the key 511k to the authenticating unit 531.

In step S414, the request source application 511 issues a function via the instance generated via steps S108 to S112 to use the hardware resource. Thereafter, the request source application 511 discards the instance generated via steps S108 to S112. Since the instance is discarded, the request source application 511 needs to repeat the processing in steps S403, S104 to S108, and S414 every time the request source application 511 is about to use the hardware resource (the sensor device 553), in other words, the request source application 511 issues a function.

As explained above, according to the variation 3 of the changing processing (Fig. 9), the changing processing is executed when the request source application 511 uses the hardware resource. As a result, the authenticating unit 531 can authenticate the validity of the request source application 511 every time the request source application 511 uses the hardware resource. Therefore, it is possible to improve a security level in the platform 500.

### A-4-4. Variation 4

In changing processing in a variation 4, authentication processing is applied to the application included in the application layer 510 and about to use a software resource. A degree of usability of the software resource by the application is changed according to a result of the authentication processing. Concerning details of the changing processing, "hardware resource" of the changing processing explained in Figs. 6 to 9 only has to read "software resource". Note that the software resource is a program incorporated in the HMD 100 and not depending on the hardware resource.

As explained above, according to the variation 4 of the changing processing, the changing unit 532 changes a degree of usability of the software resource by the request source application 511 according to the result of the authentication (step S104 in Figs. 6 to 9) (steps S108 to S112). Therefore, it is possible to provide a difference in the degree of usability of the software resources between the specific application successful in the authentication and the other application unsuccessful in the authentication. For example, by combining the variation 1 (Fig. 7) with the variation 4, it is possible to implement a form in which the specific application is allowed to use the software resource of the HMD 100 (the information processing device) and the other application are disallowed to use the software resources of the HMD 100. For example, by combining the changing processing (Fig. 6) with the changing processing, the changing unit 532 can set the performance of the software resources usable by the specific application higher than the performance of the software resource usable by the other application.

### A-5. Authentication processing

Fig. 10 is an explanatory diagram showing a procedure of authentication processing. The authentication processing is processing for authenticating the validity of an application about to use a hardware resource. The authentication processing is executed as a subroutine of the changing processing. In the following explanation, as the application about to use the hardware resource, the home application 511 is illustrated. The home application 511 is referred to as "request source application 511".

In step S12, the request source application 511 transmits the application name 511n and the key 511k to the authenticating unit 531. Details are as explained in step S102 of the changing processing.

In step S14, the authenticating unit 531 applies a hash operation to authentication information 531s stored in the authenticating unit 531 in advance and the application name 511n received from the request source application 511. The "authentication information" is information used for checking the validity of the request source application 511 in the authentication processing. The "authentication information" can be, for example, any character string. Note that, when generating the key 511k provided to the request source application 511, a provider of the platform 500 uses information same as the authentication information 531s used in step S14.

In step S16, the authenticating unit 531 collates a trial key obtained as a result of the hash operation in step S14 and the key 511k received from the request source application 511. If the keys coincide with each other, the authenticating unit 531 determines that the request source application 511 is a valid application (a result of the authentication: successful). If the keys do not coincide with each other, the authenticating unit 531 determines that the request source application 511 is not the valid application (the result of the authentication: unsuccessful).

In this way, according to the authentication processing in the first embodiment (Fig. 10), the authenticating unit 531 authenticates the validity of the request source application 511. Therefore, it is possible to distinguish, through the authentication, "the specific application successful in the authentication" and "the other application unsuccessful in the authentication". The request source application 511 transmits the application name 511n (the name) and the key 511k to the authenticating unit 531. The authenticating unit 531 generates the trial key by applying the hash operation to the application name 511n received from the request source application 511 and the authentication information 531s stored in advance. The authenticating unit 531 authenticates the validity of the request source application 511 according to whether the generated trial key and the key 511k received from the request source application 511 coincide with each other. As a result, it is possible to conceal, in the authenticating unit 531, the authentication information 531s used for the generation of the key 511k to be distributed to the request source application 511. Therefore, it is possible to improve security in the authentication processing.

### A-6. Variation of the authentication processing

The authentication processing explained above may be modified as explained below.

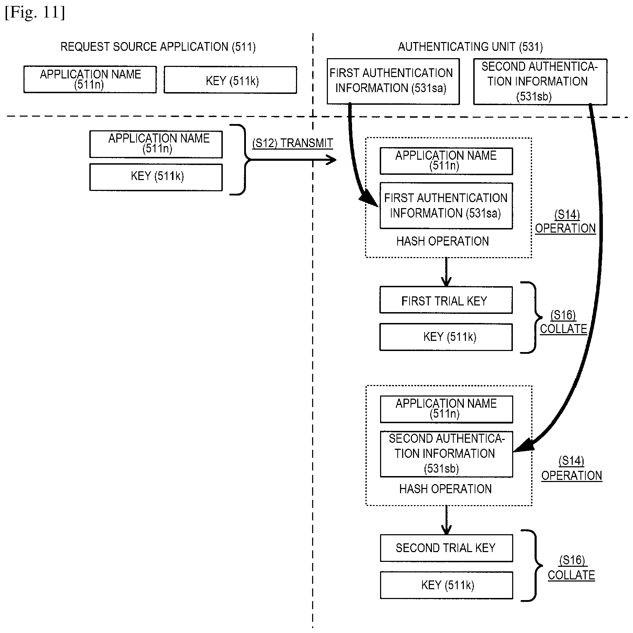

Fig. 11 is an explanatory diagram showing a procedure of authentication processing in a variation. In the authentication processing in the variation, presence or absence of the validity of the request source application 511 and a level of the validity of the request source application 511 are authenticated using a plurality of kinds of authentication information. The authentication processing is different from the authentication processing shown in Fig. 10 in that steps S12 to S16 are repeated a plurality of times using different kinds of authentication information.

In the authenticating unit 531, first authentication information 531sa and second authentication information 531sb different from the first authentication information 531sa are stored in advance. When generating the key 511k to be provided to the request source application 511, the provider of the platform 500 uses information same as any one of the first authentication information 531sa and the second authentication information 531sb.

The authenticating unit 531 executes steps S12 to S16 using the application name 511n received from the request source application 511, the key 511k, and the first authentication information 531sa. Details of the steps are the same as those shown in Fig. 10. If the key 511k and the first trial key obtained using the first authentication information 531sa coincide with each other in step S16, the authenticating unit 531 determines that the request source application 511 is a valid application and a level of the validity of the request source application 511 is "1" (a result of the authentication: successful).

The authenticating unit 531 executes steps S12 to S16 again using the application name 511n received from the request source application 511, the key 511k, and the second authentication information 531sb. If the key 511k and a second trial key obtained using the second authentication information 531sb coincide with each other in step S16, the authenticating unit 531 determines that the request source application 511 is a valid application and a level of the validity of the request source application 511 is "2" (the result of the authentication: successful).

When the key 511k and the trial key do not coincide with each other in all steps S12 to S16 executed a plurality of times, the authenticating unit 531 determines that the request source application 511 is not a valid application (the result of the authentication: unsuccessful).

As explained above, according to the variation of the authentication processing, the authenticating unit 531 can authenticate presence or absence of the validity of the request source application 511 and a level of the validity of the request source application 511 using the first authentication information 531sa and the second authentication information 531sb. As a result, through the authentication, the authenticating unit 531 can not only distinguish "the specific application successful in the authentication" and "the other application unsuccessful in the authentication" but also distinguish "a first specific application successful in the authentication", "a second specific application successful in the authentication", and "the other application unsuccessful in the authentication". As a result, for example, it is possible to set the accuracy of GPS resolution of the GPS module 134 to within 10 cm in the case of the first specific application (a genuine application) successful in the authentication, set the accuracy of the GPS resolution of the GPS module 134 to within 1 m in the case of the second specific application (a compatible application) successful in the authentication, and set the accuracy of the GPS resolution of the GPS module 134 to within 10 m in the case of the other application (a general application) unsuccessful in the authentication.

Note that, in the variation, an example in which two kinds of authentication information are used is explained. However, three or more kinds of authentication information may be used. When the authentication processing in the variation is adopted, in the changing processing explained with reference to Figs. 6, 8, and 9, the changing unit 532 may provide the request source application 511 with different libraries (e.g., a standard library, a first special library, and a second special library) respectively according to levels of the validity of the request source application 511.

### B. Second Embodiment

In a second embodiment of the invention, a configuration for causing an application to store a key in advance is explained. In the following explanation, only components having configurations and operations different from those in the first embodiment in the figures are explained. Note that components same as those in the first embodiment in the figures are denoted by reference numerals and signs same as those in the first embodiment. Detailed explanation of the components is omitted.

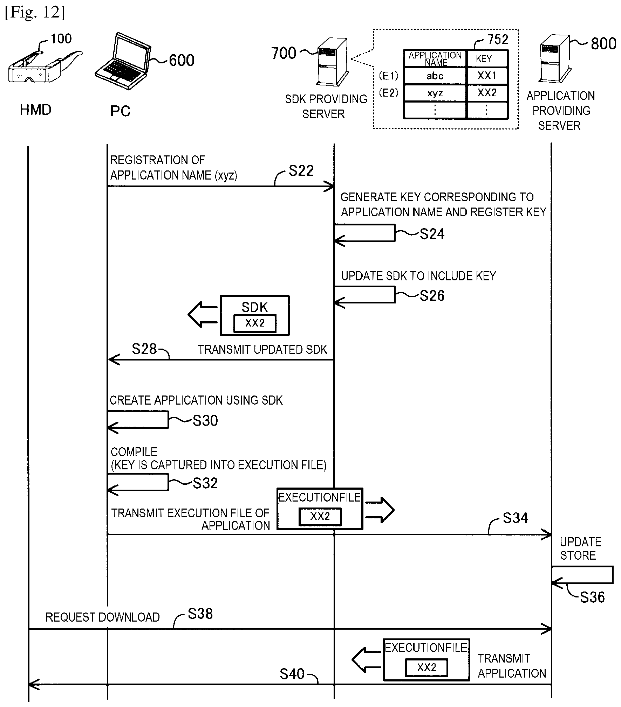

Fig. 12 is a sequence chart showing a processing procedure in the second embodiment. As shown in Fig. 12, in the second embodiment, in addition to the information processing device (the HMD 100) explained in the first embodiment, the information processing system includes a PC 600 functioning as an application development environment, an SDK (Software Development Kit) providing server 700, and an application providing server 800. The HMD 100, the PC 600, the SDK providing server 700, and the application providing server 800 are connected to one another via, for example, the Internet. Note that the PC 600 functions as a "client apparatus" and the SDK providing server 700 functions as a "server apparatus".

The configuration of the HMD 100 functioning as the information processing device and changing processing and authentication processing executed in the HMD 100 are the same as those in the first embodiment explained above.

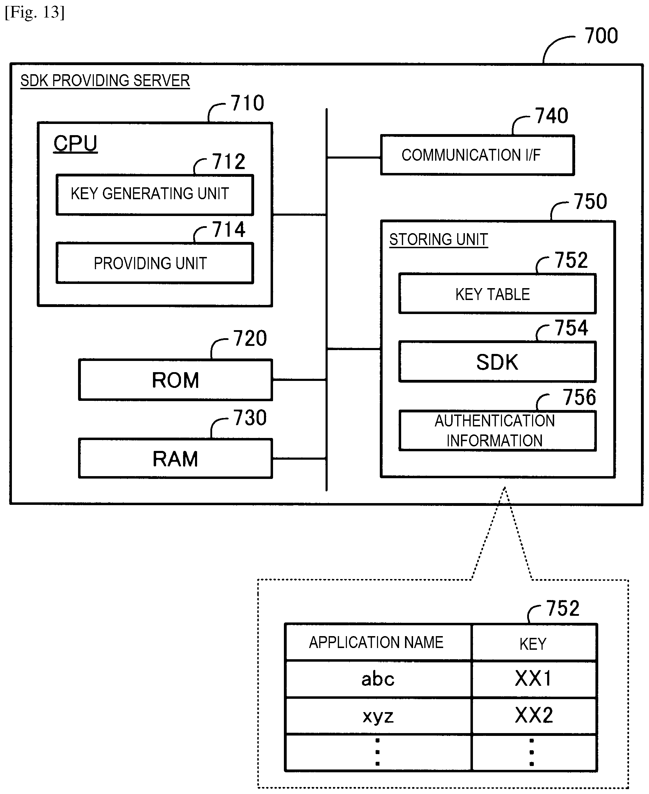

Fig. 13 is a block diagram functionally showing the configuration of the SDK providing server 700. The SDK providing server 700 includes a CPU 710, a ROM 720, a RAM 730, a communication interface (I/F) 740, and a storing unit 750. The units are connected to one another by a not-shown bus.

The CPU 710 expands, on the RAM 730, a computer program stored in the ROM 720 or the storing unit 750 and executes the computer program to thereby control the units of the SDK providing server 700. Besides, the CPU 710 also functions as a key generating unit 712, a providing unit 714, and a transmitting and receiving unit 716. The key generating unit 712 generates a key to be distributed to an application. The providing unit 714 provides the PC 600 with an SDK functioning as an application development environment.

The communication interface 740 includes a radio communication interface and a wired communication interface. The radio communication interface includes a not-shown transmission and reception circuit and performs demodulation of a radio wave received via an antenna and generation of data and generation and modulation of a radio wave to be transmitted via the antenna. The wired communication interface is connected to another apparatus via a wired cable.

The storing unit 750 is configured by a ROM, a RAM, a DRAM, a hard disk, or the like. The storing unit 750 includes a key table 752, an SDK 754, and authentication information 531s. The key table 752 includes an application name and a key. The "application name" is a name given in order to uniquely identify an application. The "key" is a key used in order to authenticate the validity of the application. The SDK 754 is a set of development tools used by a software technician (i.e., a user of the PC 600) to create an application, that is, a development program. Authentication information 756 is information same as the authentication information 531s stored in the authenticating unit 531 in advance.

In step S22 in Fig. 12, the PC 600 requests the SDK providing server 700 to register an application name (xyz) to be developed.

In step S24, the key generating unit 712 of the SDK providing server 700 generates, on the basis of the application name (xyz) received from the PC 600 and the authentication information 756 stored in the storing unit 750, a key (XX2) corresponding to the application name. The key generating unit 712 causes the key table 752 to store the application name received from the PC 600 and the generated key in association with each other. As a result, the key "XX2" is stored in an entry E2 of the key table 752 in association with the application name "xyz".

In step S26, the providing unit 714 of the SDK providing server 700 acquires the SDK 754 stored in the storing unit 750, incorporates the key (XX2) generated in step S24 in the SDK 754, and updates the SDK 754. In step S28, the providing unit 714 transmits the updated SDK 754 to the PC 600.

In step S30, the PC 600 creates an application using the SDK 754. In step S32, the PC 600 compiles the application (creates an execution file). In this case, the key (XX2) incorporated in the SDK 754 is captured into the execution file of the application and stored in the application. In step S34, the PC 600 transmits the created execution file of the application to the application providing server 800.

In step S36, the application providing server 800 places, as an "application", the execution file received from the PC 600 in an application store for users (updates the store). In step S38, the HMD 100 requests the application providing server 800 to download a desired application. In step S40, the application providing server 800 transmits a designated application to the HMD 100. The key (XX2) provided from the SDK providing server 700 is stored in advance in the application (the execution file) transmitted from the application providing server 800 to the HMD 100.

Consequently, the SDK providing server 700 (the server apparatus) can integrate the key (XX2) for authenticating the validity of the application and the SDK 754 (the development program) for supporting the development of the application and provide the PC 600 (the client apparatus) with the key (XX2) and the SDK 754. As a result, it is possible to facilitate the application created by the PC 600 to store the key (XX2) in advance. If a provider of the SDK providing server 700 and the provider of the platform 500 (Fig. 4) are the same or in a cooperative relation, it is possible to smoothly and effectively advance a series of processing from distribution of a key to authentication performed using the key.

### C. Modifications

In the embodiment, a part of components implemented by hardware may be replaced with software. Conversely, a part of components implemented by software may be replaced with hardware. Besides, modifications explained below are also possible.

### Modification 1

In the embodiment, the configuration of the HMD is illustrated.

The allocation of the components to the control unit and the image display unit is only an example. Various forms of the allocation can be adopted. For example, forms explained below may be adopted. (i) A form in which processing functions such as a CPU and a memory are mounted on the control unit and only a display function is mounted on the image display unit, (ii) a form in which the processing functions such as the CPU and the memory are mounted on both of the control unit and the image display unit, (iii) a form in which the control unit and the image display unit are integrated (e.g., a form in which the control unit is included in the image display unit and functions as an eyeglass-type wearable computer), (iv) a form in which a smartphone or a portable game machine is used instead of the control unit, (v) a form in which the control unit and the image display unit are connected via a wireless signal transmission line such as a wireless LAN, infrared communication, or Bluetooth (registered trademark) and a connecting unit (a cord) is removed. Note that, in this case, power supply to the control unit or the image display unit may be carried out wirelessly.

For example, the configurations of the control unit and the image display unit illustrated in the embodiment can be optionally changed. Specifically, for example, in the embodiment, the control unit includes the transmitting unit, and the image display unit includes the receiving unit. However, both of the transmitting unit and the receiving unit may include a function capable of performing bidirectional communication and may function as a transmitting and receiving unit. For example, a part of the interface for operation (the keys, the track pad, etc.) included in the control unit may be omitted. Another interface for operation such as a stick for operation may be included in the control unit. Devices such as a keyboard and a mouse may be connectable to the control unit such that the control unit receives inputs from the keyboard and the mouse. For example, the secondary cell is used as the power supply. However, the power supply is not limited to the secondary cell. Various cells can be used. For example, a primary cell, a fuel cell, a solar cell, or a thermal cell may be used.

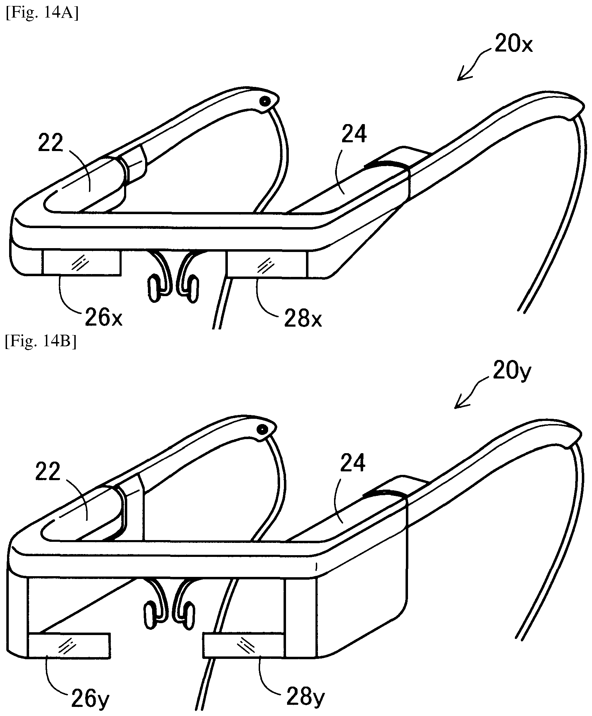

Figs. 14A and 14B are explanatory diagrams showing the external configurations of HMDs in a modification. In an example shown in Fig. 14A, an image display unit 20x includes a right optical-image display unit 26x instead of the right optical-image display unit 26 and includes a left optical-image display unit 28x instead of the left optical-image display unit 28. The right optical-image display unit 26x and the left optical-image display unit 28x are formed smaller than the optical member in the embodiment and are respectively disposed obliquely above the right eye and the left eye of a user when the user wears the HMD. In an example shown in Fig. 14B, an image display unit 20y includes a right optical-image display unit 26y instead of the right optical-image display unit 26 and includes a left optical-image display unit 28y instead of the left optical-image display unit 28. The right optical-image display unit 26y and the left optical-image display unit 28y are formed smaller than the optical member in the embodiment and are respectively disposed obliquely below the right eye and the left eye of a user when the user wears the HMD. In this way, the optical-image display units only have to be disposed near the eyes of the user. The size of optical members forming the optical-image display units also may be any size. The optical-image display units can also be implemented as an HMD of a form in which the optical-image display units cover only a portion of the eyes of the user, in other words, a form in which the optical-image display unit do not completely cover the eyes of the user.

For example, the processing units (e.g., the image processing unit and the display control unit) included in the control unit are described as being implemented by the CPU expanding, on the RAM, the computer program stored in the ROM or the hard disk and executing the computer program. However, these functional units may be configured using an ASIC (Application Specific Integrated Circuit) designed for implementing the functions.

For example, the HMD is the transmissive HMD of a binocular type. However, the HMD may be a HMD of a monocular type. The HMD may be configured as a nontransmissive HMD that blocks transmission of an outside scene in a state in which the user wears the HMD or may be configured as a video see-through HMD in which a camera is mounted on the nontransmissive HMD. For example, as the image display unit, instead of the image display unit worn like eyeglasses, a normal flat display device (a liquid crystal display device, a plasma display device, an organic EL display device, etc.) may be adopted. In this case, as in the embodiment, the control unit and the image display unit may be connected via a wired signal transmission line or may be connected via a wireless signal transmission line. Consequently, the control unit can also be used as a remote controller of the normal flat display device. For example, as the image display unit, instead of the image display unit worn like eyeglasses, an image display unit of another shape such as an image display unit worn like a cap may be adopted. As the earphone, an ear hook type or a headband type may be adopted. The earphone may be omitted. For example, the image display unit may be configured as a head-up display (HUD) mounted on vehicles such as an automobile, an airplane or other means of transportation. For example, the image display unit may be configured as an HMD incorporated in body protective equipment such as a helmet.

For example, in the embodiment, the image-light generating unit is configured using the backlight, the backlight control unit, the LCD, and the LCD control unit. However, the form is only an example. The image-light generating unit may include components for implementing another system in addition to the components or instead of the components. For example, the image-light generating unit may include an organic EL (organic Electro-Luminescence) display and an organic EL control unit. For example, the image generating unit can include a digital micro mirror device or the like instead of the LCD. For example, the invention can also be applied to a head-mounted display device of a laser retina projection type.

### Modification 2

In the embodiment, the configuration of the platform is illustrated.

For example, the respective kinds of library software included in the library layer 530 may respectively have the functions of the authenticating unit library and the changing unit library. In this case, the authenticating unit library and the changing unit library independent from each other shown in Fig. 5 can be omitted.

For example, in the library layer 530, one library software obtained by integrating the functions of the authenticating unit library and the changing unit library may be included. In this case as well, the authenticating unit library and the changing unit library independent from each other shown in Fig. 5 can be omitted.

### Modification 3

In the embodiment, the examples of the changing processing and the authentication processing are explained.

For example, in the changing processing, the changing unit may carry out the changing processing only on a part of the applications included in the application layer 510 or may exclude a part of the applications from targets of the changing processing. Specifically, priority levels may be set for the applications. The changing unit may determine, according to whether a priority degree of an application is higher or lower than a predetermined value, whether the application is a target of the changing processing. For example, the changing unit may determine, according to whether an application is installed in the HMD in advance, whether the application is a target of the changing processing. For example, types may be set for the applications. The changing unit may determine, according to whether an application corresponds to a predetermined type, whether the application is a target of the changing processing. For example, the changing unit may determine, according to whether an application coincides with a pattern file stored in advance, whether the application is a target of the changing processing.

For example, when the request source application does not spontaneously transmit an application name and a key, in the changing processing, the changing unit may request the request source application to transmit the application name and the key.

For example, in the changing processing, the changing unit changes the degree of usability of the hardware resource by the request source application by properly using the standard library and the special library. However, the changing unit may change the degree of usability of the hardware resource by the request source application by changing, concerning a plurality of hardware resources incorporated in the HMD, independent use of one hardware resource or combined use of the plurality of hardware resources in addition to or instead of properly using the libraries. For example, when the GPS resolution of the GPS module is 1 m, it is possible to improve the GPS resolution to 10 cm by combining the GPS module and a displacement sensor. When the authentication is successful, the changing unit may enable the request source application to use the GPS module and the displacement sensor in combination. When the authentication is unsuccessful, the changing unit may enable the request source application to use only the GPS module.

For example, in the authentication processing, the authenticating unit may authenticate the validity of the request source application using, instead of the hash operation performed using the application name and the specific information, a method of determining whether the application name received from the request source application is included in "a list of permitted application names" stored in the authenticating unit in advance.

For example, in the authentication processing, the authenticating unit may authenticate the validity of the request source application using a known authentication method (e.g., a DES (Data Encryption Standard) or an AES (Advanced Encryption Standard)) other than the hash operation.

For example, the changing unit may properly use, according to the hardware resource incorporated in the HMD or the function that the request source application is about to issue, the changing processing explained with reference to Fig. 6, the changing processing in the variation 1 explained with reference to Fig. 7, the changing processing in the variation 2 explained with reference to Fig. 8, the changing processing explained in the variation 3 explained with reference to Fig. 9, and the changing processing in the variation 4.

### Reference Signs List

10 Control unit
11 Determination key
12 Lighting unit
13 Display switching key
14 Track pad
15 Luminance switching key
16 Direction key
17 Menu key
18 Power switch
20 Image display unit
21 Right holding unit
22 Right display driving unit
23 Left holding unit
24 Left display driving unit
26 Right optical-image display unit
28 Left optical-image display unit
30 Earphone plug
32 Right earphone
34 Left earphone
40 Connecting unit
42 Right cord
44 Left cord
46 Coupling member
48 Main body cord
51 Transmitting unit
52 Transmitting unit
53 Receiving unit
54 Receiving unit
61 Camera
66 Nine-axis sensor
110 Input-information acquiring unit
100 HMD (Information processing device)
120 Storing unit
130 Power supply
132 Radio communication unit
140 CPU
160 Image processing unit
170 Sound processing unit
180 Interface
190 Display control unit
201 Right backlight control unit
202 Left backlight control unit
211 Right LCD control unit
212 Left LCD control unit
221 Right backlight
222 Left backlight
241 Right LCD
242 Left LCD
251 Right projection optical system
252 Left projection optical system
261 Right light guide plate
262 Left light guide plate
500 Platform
510 Application layer
511 Request source application, Home application
511k Key
511n Application name
512 Image processing unit application
513 Display control unit application
514 Sound processing unit application
515 Game application
516 Camera application
520 Framework layer
530 Library layer
531 Authenticating unit library (Authenticating unit)
531s Authentication information
532 Changing unit library (Changing unit)
533 Display library
534 Audio library
535 Sensor library
536 Camera library
537 Library
540 Kernel layer
542 Sound IC driver
543 Sensor driver
544 Image sensor driver
550 Hardware layer (Hardware resource)
552 Sound IC device
553 Sensor device
554 Image sensor device
600 PC (Client apparatus)
700 SDK providing server (Server apparatus)
710 CPU
712 Key generating unit
714 Providing unit
716 Transmitting and receiving unit
740 Communication interface
750 Storing unit
752 Key table
756 Authentication information
800 Application providing server
PCLK Clock signal
VSync Vertical synchronization signal
HSync Horizontal synchronization signal
Data Image data
Data1 Image data for right eye
Data2 Image data for left eye
OA External apparatus
PC Personal computer
SC Outside scene
VI Virtual image
VR Visual field
RE Right eye
LE Left eye
ER End
EL End

## Claims

1. An information processing device comprising:
an application configured to execute predetermined processing;
a hardware resource used by the application, the hardware resource being one of a display device (551), a sound IC device (552), a sensor device (553) and an image sensor device (554);
an authenticating unit configured to authenticate validity of the application;
a changing unit configured to change a degree of usability of the hardware resource by the application according to a result of the authentication, by setting performance of the hardware resource usable by the application when the authentication is successful higher than performance of the hardware resource usable by the application when the authentication is unsuccessful; and
a plurality of libraries for using the hardware resource, the plurality of libraries having different functions allocated to the hardware resource, wherein
the changing unit changes the performance of the hardware resource usable by the application by enabling use of a particular library among the plurality of libraries according to the result of the authentication,
the performance of the hardware resource is at least one of accuracy of the hardware resource and operation speed of the hardware resource,
authentication information for the authentication is further stored in the authenticating unit in advance, **Characterized by**
a name for uniquely identifying the application and a key generated using the name and the authentication information are stored in the application in advance,
the application transmits the name and the key to the authenticating unit, and
the authenticating unit generates a trial key through an arithmetic operation using the received name and the authentication information stored in advance and authenticates the validity of the application using the generated trial key and the received key.

2. The information processing device according to claim 1, wherein the application uses the libraries via a single command irrespective of the library enabled to be used.

3. The information processing device according to claim 1, wherein the application uses the libraries via different commands corresponding to the library enabled to be used.

4. The information processing apparatus according to any one of claims 1 to 3, wherein
the authenticating unit carries out the authentication during initialization of the application, and
the changing unit may change the degree of usability of the hardware resource during the initialization of the application.

5. The information processing apparatus according to any one of claims 1 to 3, wherein
the authenticating unit carries out the authentication when the application uses the hardware resource, and
the changing unit changes the degree of usability of the hardware resource when the application uses the hardware resource.

6. The information processing apparatus according to any one of claims 1 to 5, further comprising a software resource used by the application, wherein
the changing unit further changes a degree of usability of the software resource by the application according to the result of the authentication.

7. The information processing apparatus according to any of claims 1 to 6, wherein
the authentication information stored in the authenticating unit includes first authentication information and second authentication information,
the key stored in the application is generated using at least one of the first authentication information and the second authentication information, and
the authenticating unit authenticates presence or absence of the validity of the application and a level of the validity by respectively determining
a first trial key generated using the received name and the first authentication information stored in advance and the received key, and
a second trial key generated using the received name and the second authentication information stored in advance and the received key, wherein:
the authenticating unit determines whether or not the first and second trial keys coincide with the received key,
if the authenticating unit determines that the received key coincides with the first trial key then the application is determined to have a first level of validity,
if the authenticating unit determines that the received key coincides with the second trial key then the application is determined to have a second level of validity, and
if the authenticating unit determines that the received key coincides with neither the first trial key nor the second trial key then the application is determined not to be valid.

8. A method of controlling an information processing device, comprising:
authenticating validity of an application configured to execute predetermined processing; and
changing, according to a result of the authentication, a degree of usability of a hardware resource by the application, the hardware resource being one of a display device (551), a sound IC device (552), a sensor device (553) and an image sensor device (554), by setting performance of the hardware resource usable by the application when the authentication is successful higher than performance of the hardware resource usable by the application when the authentication is unsuccessful,
the information processing device comprises a plurality of libraries for using the hardware resource, the plurality of libraries having different functions allocated to the hardware resource, and
the step of changing changes the performance of the hardware resource usable by the application by enabling use of a particular library among the plurality of libraries according to the result of the authentication,
the performance of the hardware resource is at least one of accuracy of the hardware resource and operation speed of the hardware resource,
the method further comprises steps of:
storing authentication information for the authentication in an authenticating unit in advance,
**characterized in that**:
storing a name for uniquely identifying the application and a key generated using the name and the authentication information in the application in advance,
the application transmitting the name and the key to the authenticating unit, and
the authenticating unit generating a trial key through an arithmetic operation using the received name and the authentication information stored in advance,
wherein the authenticating step comprises authenticating the validity of the application using the generated trial key and the received key.

9. A computer program for causing a computer to implement:
a function of authenticating validity of an application configured to execute predetermined processing; and
a function of changing, according to a result of the authentication, a degree of usability of a hardware resource by the application, the hardware resource being one of a display device (551), a sound IC device (552), a sensor device (553) and an image sensor device (554), by setting performance of the hardware resource usable by the application when the authentication is successful higher than performance of the hardware resource usable by the application when the authentication is unsuccessful,
the computer comprises a plurality of libraries for using the hardware resource, the plurality of libraries having different functions allocated to the hardware resource, and
the function of changing changes the performance of the hardware resource usable by the application by enabling use of a particular library among the plurality of libraries according to the result of the authentication,
the performance of the hardware resource is at least one of accuracy of the hardware resource and operation speed of the hardware resource, and
the computer program further causes the computer to implement functions of:
storing authentication information for the authentication in an authenticating unit in advance,
**characterized in that**:
storing a name for uniquely identifying the application and a key generated using the name and the authentication information in the application in advance,
the application transmitting the name and the key to the authenticating unit, and
the authenticating unit generating a trial key through an arithmetic operation using the received name and the authentication information stored in advance,
wherein the authenticating function comprises authenticating the validity of the application using the generated trial key and the received key.

10. An information processing system comprising:
a client apparatus functioning as a development environment of an application configured to execute predetermined processing, the client apparatus comprising the information processing device according to claim 1; and
a server apparatus, wherein
the server apparatus includes:
a storing unit configured to store a development program for supporting development of the application;
a key generating unit configured to generate, when a name for uniquely identifying the application is received from the client apparatus, a key corresponding to the name and for authenticating validity of the application; and
a providing unit configured to integrate the generated key and the development program and provide the client apparatus with the generated key and the development program.

## Patentansprüche

1. Informationsverarbeitungsvorrichtung, umfassend:
eine Anwendung, die zum Ausführen einer vorbestimmten Verarbeitung konfiguriert ist;
eine Hardware-Ressource, die von der Anwendung verwendet wird, wobei die Hardware-Ressource eine von einer Anzeigevorrichtung (551), einer Ton-IC-Vorrichtung (552), einer Sensorvorrichtung (553) und einer Bildsensorvorrichtung (554) ist;
eine Authentifizierungseinheit, die zum Authentifizieren einer Gültigkeit der Anwendung konfiguriert ist;
eine Änderungseinheit, die zum Ändern eines Grades an Verwendbarkeit der Hardware-Ressource durch die Anwendung gemäß einem Ergebnis der Authentifizierung konfiguriert ist, durch Einstellen einer Leistung der Hardware-Ressource, die durch die Anwendung verwendbar ist, wenn die Authentifizierung erfolgreich ist, höher als eine Leistung der Hardware-Ressource, die durch die Anwendung verwendbar ist, wenn die Authentifizierung nicht erfolgreich ist; und
eine Vielzahl von Bibliotheken zur Verwendung der Hardware-Ressource, wobei die Vielzahl von Bibliotheken verschiedene Funktionen hat, die der Hardware-Ressource zugeordnet sind, wobei
die Änderungseinheit die Leistung der Hardware-Ressource, die durch die Anwendung verwendbar ist, ändert, indem eine Verwendung einer bestimmten Bibliothek unter der Vielzahl von Bibliotheken gemäß dem Ergebnis der Authentifizierung freigegeben wird, die Leistung der Hardware-Ressource mindestens eines von Exaktheit der Hardware-Ressource und Betriebsgeschwindigkeit der Hardware-Ressource ist,
Authentifizierungsinformationen für die Authentifizierung ferner in der Authentifizierungseinheit vorab gespeichert werden,
**dadurch gekennzeichnet, dass**
ein Name zur eindeutigen Identifizierung der Anwendung und ein Schlüssel, der unter Verwendung des Namens generiert wird, und die Authentifizierungsinformationen vorab in der Anwendung gespeichert werden,
die Anwendung den Namen und den Schlüssel zur Authentifizierungseinheit sendet und
die Authentifizierungseinheit einen Versuchsschlüssel durch eine arithmetische Operation unter Verwendung des empfangenen Namens und der Authentifizierungsinformationen, die vorab gespeichert sind, generiert und die Gültigkeit der Anwendung unter Verwendung des generierten Versuchsschlüssels und des empfangenen Schlüssels authentifiziert.

2. Informationsverarbeitungsvorrichtung nach Anspruch 1, wobei die Anwendung die Bibliotheken über einen einzigen Befehl verwendet, unabhängig von der zu verwendenden, freigegebenen Bibliothek.

3. Informationsverarbeitungsvorrichtung nach Anspruch 1, wobei die Anwendung die Bibliotheken über verschiedene Befehle entsprechend der zu verwendenden, freigegebenen Bibliothek verwendet.

4. Informationsverarbeitungsvorrichtung nach einem der Ansprüche 1 bis 3, wobei die Authentifizierungseinheit die Authentifizierung während einer Initialisierung der Anwendung ausführt und
die Änderungseinheit den Verwendbarkeitsgrad der Hardware-Ressource während der Initialisierung der Anwendung ändern kann.

5. Informationsverarbeitungsvorrichtung nach einem der Ansprüche 1 bis 3, wobei die Authentifizierungseinheit die Authentifizierung ausführt, wenn die Anwendung die Hardware-Ressource verwendet, und
die Änderungseinheit den Verwendbarkeitsgrad der Hardware-Ressource ändert, wenn die Anwendung die Hardware-Ressource verwendet.

6. Informationsverarbeitungsvorrichtung nach einem der Ansprüche 1 bis 5, ferner umfassend eine Software-Ressource, die von der Anwendung verwendet wird, wobei
die Änderungseinheit ferner einen Verwendbarkeitsgrad der Software-Ressource durch die Anwendung gemäß dem Ergebnis der Authentifizierung ändert.

7. Informationsverarbeitungsvorrichtung nach einem der Ansprüche 1 bis 6, wobei
die Authentifizierungsinformationen, die in der Authentifizierungseinheit gespeichert sind, erste Authentifizierungsinformationen und zweite Authentifizierungsinformationen enthalten,
der Schlüssel, der in der Anwendung gespeichert ist, unter Verwendung mindestens einer der ersten Authentifizierungsinformationen und der zweiten Authentifizierungsinformationen generiert wird und
die Authentifizierungseinheit ein Vorhandensein oder Fehlen der Gültigkeit der Anwendung und einen Grad der Gültigkeit authentifiziert durch entsprechendes Bestimmen
eines ersten Versuchsschlüssels, der unter Verwendung des empfangenen Namens und der ersten Authentifizierungsinformationen, die im vorab gespeichert sind, und des empfangenen Schlüssels generiert wird, und
eines zweiten Versuchsschlüssels, der unter Verwendung des empfangenen Namens und der zweiten Authentifizierungsinformationen die im vorab gespeichert sind, und des empfangenen Schlüssels generiert wird, wobei:
die Authentifizierungseinheit bestimmt, ob der erste und zweite Versuchsschlüssel mit dem empfangenen Schlüssel übereinstimmen oder nicht,
falls die Authentifizierungseinheit bestimmt, dass der empfangene Schlüssel mit dem ersten Versuchsschlüssel übereinstimmt, bestimmt wird, dass die Anwendung einen ersten Gültigkeitsgrad hat,
falls die Authentifizierungseinheit bestimmt, dass der empfangene Schlüssel mit dem zweiten Versuchsschlüssel übereinstimmt, bestimmt wird, dass die Anwendung einen zweiten Gültigkeitsgrad hat, und
falls die Authentifizierungseinheit bestimmt, dass der empfangene Schlüssel weder mit dem ersten Versuchsschlüssel noch mit dem zweiten Versuchsschlüssel übereinstimmt, bestimmt wird, dass die Anwendung nicht gültig ist.

8. Verfahren zum Steuern einer Informationsverarbeitungsvorrichtung, umfassend:
Authentifizieren einer Gültigkeit einer Anwendung, die zum Ausführen einer vorbestimmten Verarbeitung konfiguriert ist; und
Ändern, gemäß einem Ergebnis der Authentifizierung, eines Grades einer Verwendbarkeit einer Hardware-Ressource durch die Anwendung, wobei die Hardware-Ressource eine von einer Anzeigevorrichtung (551), einer Ton-IC-Vorrichtung (552), einer Sensorvorrichtung (553) und einer Bildsensorvorrichtung (554) ist, durch Einstellen einer Leistung der Hardware-Ressource, die durch die Anwendung verwendbar ist, wenn die Authentifizierung erfolgreich ist, höher als eine Leistung der Hardware-Ressource, die durch die Anwendung verwendbar ist, wenn die Authentifizierung nicht erfolgreich ist,
wobei die Informationsverarbeitungsvorrichtung eine Vielzahl von Bibliotheken zur Verwendung der Hardware-Ressource umfasst, wobei die Vielzahl von Bibliotheken verschiedene Funktionen hat, die der Hardware-Ressource zugeordnet sind, und
der Schritt zum Ändern die Leistung der Hardware-Ressource, die durch die Anwendung verwendbar ist, ändert, indem eine Verwendung einer bestimmten Bibliothek unter der Vielzahl von Bibliotheken gemäß dem Ergebnis der Authentifizierung freigegeben wird, die Leistung der Hardware-Ressource mindestens eines von Exaktheit der Hardware-Ressource und Betriebsgeschwindigkeit der Hardware-Ressource ist,
das Verfahren ferner umfassend Schritte zum:
Speichern von Authentifizierungsinformationen für die Authentifizierung vorab in einer Authentifizierungseinheit,
**dadurch gekennzeichnet, dass**:
ein Name zur eindeutigen Identifizierung der Anwendung und ein Schlüssel, der unter Verwendung des Namens generiert wird, und die Authentifizierungsinformationen vorab in der Anwendung gespeichert werden,
die Anwendung den Namen und den Schlüssel zur Authentifizierungseinheit sendet und
die Authentifizierungseinheit einen Versuchsschlüssel durch eine arithmetische Operation unter Verwendung des empfangenen Namens und der Authentifizierungsinformationen, die vorab gespeichert sind, generiert und die Gültigkeit der Anwendung unter Verwendung des generierten Versuchsschlüssels und des empfangenen Schlüssels authentifiziert.

9. Computerprogramm zum Veranlassen eines Computers zur Implementierung:
einer Funktion zur Authentifizierung von Gültigkeit einer Anwendung, die konfiguriert ist, eine vorbestimmte Verarbeitung auszuführen; und
eine Funktion zum Ändern, gemäß einem Ergebnis der Authentifizierung, eines Grades einer Verwendbarkeit einer Hardware-Ressource durch die Anwendung, wobei die Hardware-Ressource eine von einer Anzeigevorrichtung (551), einer Ton-IC-Vorrichtung (552), einer Sensorvorrichtung (553) und einer Bildsensorvorrichtung (554) ist, durch Einstellen einer Leistung der Hardware-Ressource, die durch die Anwendung verwendbar ist, wenn die Authentifizierung erfolgreich ist, höher als eine Leistung der Hardware-Ressource, die durch die Anwendung verwendbar ist, wenn die Authentifizierung nicht erfolgreich ist,
der Computer eine Vielzahl von Bibliotheken zur Verwendung der Hardware-Ressource umfasst, wobei die Vielzahl von Bibliotheken verschiedene Funktionen hat, die der Hardware-Ressource zugeordnet sind, und
die Funktion zum Ändern die Leistung der Hardware-Ressource, die durch die Anwendung verwendbar ist, ändert, indem eine Verwendung einer bestimmten Bibliothek unter der Vielzahl von Bibliotheken gemäß dem Ergebnis der Authentifizierung freigegeben wird,
die Leistung der Hardware-Ressource mindestens eines von Exaktheit der Hardware-Ressource und Betriebsgeschwindigkeit der Hardware-Ressource ist, und
das Computerprogramm ferner den Computer veranlasst, folgende Funktionen zu implementieren:
Speichern von Authentifizierungsinformationen für die Authentifizierung vorab in einer Authentifizierungseinheit,
**dadurch gekennzeichnet, dass**:
ein Name zur eindeutigen Identifizierung der Anwendung und ein Schlüssel, der unter Verwendung des Namens generiert wird, und die Authentifizierungsinformationen vorab in der Anwendung gespeichert werden,
die Anwendung den Namen und den Schlüssel zur Authentifizierungseinheit sendet und
die Authentifizierungseinheit einen Versuchsschlüssel durch eine arithmetische Operation unter Verwendung des empfangenen Namens und der Authentifizierungsinformationen, die vorab gespeichert sind, generiert
wobei die Authentifizierungsfunktion eine Authentifizierung der Gültigkeit der Anwendung unter Verwendung des generierten Versuchsschlüssels und des empfangenen Schlüssels umfasst.

10. Informationsverarbeitungssystem, umfassend:
eine Client-Vorrichtung, die als Entwicklungsumgebung einer Anwendung dient, die zum Ausführen einer vorbestimmten Verarbeitung konfiguriert ist, wobei die Client.-Vorrichtung die Informationsverarbeitungsvorrichtung nach Anspruch 1 umfasst; und
eine Servervorrichtung, wobei
die Servervorrichtung enthält:
eine Speichereinheit, die zum Speichern eines Entwicklungsprogramms zum Unterstützen einer Entwicklung der Anwendung konfiguriert ist;
eine Schlüsselerzeugungseinheit, die zum Generieren, wenn ein Name zur eindeutigen Identifizierung der Anwendung von der Client-Vorrichtung empfangen wird, eines Schlüssels entsprechend dem Namen und zum Authentifizieren einer Gültigkeit der Anwendung konfiguriert ist; und
eine Bereitstellungseinheit, die zum Integrieren des generierten Schlüssels und des Entwicklungsprogramms und zum Bereitstellen des generierten Schlüssels und des Entwicklungsprogramms für die Client-Vorrichtung konfiguriert ist.

## Revendications

1. Dispositif de traitement d'informations comprenant :
une application configurée pour exécuter un traitement prédéterminé ;
une ressource matérielle utilisée par l'application, la ressource matérielle étant l'une parmi un dispositif d'affichage (551), un dispositif sonore à circuits intégrés (552), un dispositif de détection (553) et un dispositif de détection d'images (554) ;
une unité d'authentification configurée pour authentifier la validité de l'application ;
une unité de modification configurée pour modifier un degré d'utilisabilité de la ressource matérielle par l'application en fonction d'un résultat de l'authentification, en réglant une performance de la ressource matérielle utilisable par l'application lorsque l'authentification a réussi plus élevée qu'une performance de la ressource matérielle utilisable par l'application lorsque l'authentification a échoué ; et
une pluralité de librairies pour l'utilisation de la ressource matérielle, la pluralité de librairies comportant différentes fonctions attribuées à la ressource matérielle, dans lequel
l'unité de modification modifie la performance de la ressource matérielle utilisable par l'application en permettant l'utilisation d'une librairie en particulier parmi la pluralité de librairies en fonction du résultat de l'authentification,
la performance de la ressource matérielle est l'une au moins parmi l'exactitude de la ressource matérielle et la vitesse de fonctionnement de la ressource matérielle,
des informations d'authentification pour l'authentification sont en outre stockées préalablement dans l'unité d'authentification,
**caractérisé en ce que**
un nom pour l'identification unique de l'application, une clé générée à l'aide du nom, ainsi que des informations d'authentification sont stockés préalablement dans l'application,
l'application transmet le nom et la clé à l'unité d'authentification, et
l'unité d'authentification génère une clé d'évaluation par un calcul arithmétique à l'aide du nom reçu et des informations d'authentification stockées préalablement, et authentifie la validité de l'application à l'aide de la clé d'évaluation générée et de la clé reçue.

2. Dispositif de traitement d'informations selon la revendication 1, dans lequel l'application utilise les librairies par une commande unique quelle que soit la librairie autorisée à être utilisée.

3. Dispositif de traitement d'informations selon la revendication 1, dans lequel l'application utilise les librairies par différentes commandes correspondant à la librairie autorisée à être utilisée.

4. Dispositif de traitement d'informations selon l'une quelconque des revendications 1 à 3, dans lequel l'unité d'authentification procède à l'authentification pendant l'initialisation de l'application, et
l'unité de modification peut modifier le degré d'utilisabilité de la ressource matérielle pendant l'initialisation de l'application.

5. Dispositif de traitement d'informations selon l'une quelconque des revendications 1 à 3, dans lequel l'unité d'authentification procède à l'authentification lorsque l'application utilise la ressource matérielle, et
l'unité de modification modifie le degré d'utilisabilité de la ressource matérielle lorsque l'application utilise la ressource matérielle.

6. Dispositif de traitement d'informations selon l'une quelconque des revendications 1 à 5, comprenant en outre une ressource logicielle utilisée par l'application, dans lequel
l'unité de modification modifie en outre un degré d'utilisabilité de la ressource logicielle par l'application en fonction du résultat de l'authentification.

7. Dispositif de traitement d'informations selon l'une quelconque des revendications 1 à 6, dans lequel
les informations d'authentification stockées dans l'unité d'authentification comprennent une première information d'authentification et une deuxième information d'authentification, et
l'unité d'authentification authentifie la présence ou l'absence de validité de l'application et un niveau de validité en déterminant respectivement
une première clé d'évaluation générée à l'aide du nom reçu et de la première information d'authentification stockée préalablement et de la clé reçue, et
une deuxième clé d'évaluation générée à l'aide du nom reçu et de la deuxième information d'authentification stockée préalablement et de la clé reçue, dans lequel :
l'unité d'authentification détermine si les première et deuxième clés d'évaluation coïncident ou non avec la clé reçue,
si l'unité d'authentification détermine que la clé reçue coïncide avec la première clé d'évaluation, l'application sera considérée comme ayant un premier niveau de validité,
si l'unité d'authentification détermine que la clé reçue coïncide avec la deuxième clé d'évaluation, l'application sera considérée comme ayant un deuxième niveau de validité, et
si l'unité d'authentification détermine que la clé reçue ne coïncide ni avec la première clé d'évaluation ni avec la deuxième clé d'évaluation, l'application sera considérée comme non valide.

8. Procédé destiné à commander un dispositif de traitement d'informations, comprenant :
l'authentification de la validité d'une application configurée pour exécuter un traitement prédéterminé ;
et
la modification, en fonction d'un résultat de l'authentification, d'un degré d'utilisabilité d'une ressource matérielle par l'application, la ressource matérielle étant l'une parmi un dispositif d'affichage (551), un dispositif sonore à circuits intégrés (552), un dispositif de détection (553) et un dispositif de détection d'images (554), en réglant une performance de la ressource matérielle utilisable par l'application lorsque l'authentification a réussi plus élevée qu'une performance de la ressource matérielle utilisable par l'application lorsque l'authentification a échoué,
le dispositif de traitement d'informations comprend une pluralité de librairies pour l'utilisation de la ressource matérielle, la pluralité de librairies comportant différentes fonctions attribuées à la ressource matérielle, et
l'étape de modification modifie la performance de la ressource matérielle utilisable par l'application en permettant l'utilisation d'une librairie en particulier parmi la pluralité de librairies en fonction du résultat de l'authentification,
la performance de la ressource matérielle est l'une au moins parmi l'exactitude de la ressource matérielle et la vitesse de fonctionnement de la ressource matérielle,
le procédé comprenant en outre les étapes suivantes :
stockage préalable d'informations d'authentification pour l'authentification dans une unité d'authentification,
**caractérisé par**
le stockage d'un nom pour l'identification unique de l'application, d'une clé générée à l'aide du nom et d'informations d'authentification, préalablement dans l'application,
la transmission du nom et de la clé à l'unité d'authentification par l'application, et
la génération d'une clé d'évaluation par l'unité d'authentification par un calcul arithmétique à l'aide du nom reçu et des informations d'authentification stockées préalablement,
dans lequel l'étape d'authentification comprend l'authentification de la validité de l'application à l'aide de la clé d'évaluation générée et de la clé reçue.

9. Programme informatique destiné à inciter un ordinateur à mettre en oeuvre :
une fonction d'une validité d'authentification d'une application configurée pour exécuter un traitement prédéterminé ; et
une fonction de modification, en fonction d'un résultat de l'authentification, d'un degré d'utilisabilité d'une ressource matérielle par l'application, la ressource matérielle étant l'une parmi un dispositif d'affichage (551), un dispositif sonore à circuits intégrés (552), un dispositif de détection (553) et un dispositif de détection d'images (554), en réglant une performance de la ressource matérielle utilisable par l'application lorsque l'authentification a réussi plus élevée qu'une performance de la ressource matérielle utilisable par l'application lorsque l'authentification a échoué,
l'ordinateur comprend une pluralité de librairies pour l'utilisation de la ressource matérielle, la pluralité de librairies comportant différentes fonctions attribuées à la ressource matérielle, et
la fonction de modification modifie la performance de la ressource matérielle utilisable par l'application en permettant l'utilisation d'une librairie en particulier parmi la pluralité de librairies en fonction du résultat de l'authentification,
la performance de la ressource matérielle est l'une au moins parmi l'exactitude de la ressource matérielle et la vitesse de fonctionnement de la ressource matérielle, et
le programme informatique incitant en outre l'ordinateur à mettre en oeuvre les fonctions suivantes :
stockage préalable d'informations d'authentification pour l'authentification dans une unité d'authentification,
**caractérisé par**
le stockage d'un nom pour l'identification unique de l'application, d'une clé générée à l'aide du nom et d'informations d'authentification, préalablement dans l'application,
la transmission du nom et de la clé à l'unité d'authentification par l'application, et
la génération d'une clé d'évaluation par l'unité d'authentification par un calcul arithmétique à l'aide du nom reçu et des informations d'authentification stockées préalablement,
dans lequel la fonction d'authentification comprend l'authentification de la validité de l'application à l'aide de la clé d'évaluation générée et de la clé reçue.

10. Système de traitements d'informations, comprenant :
un dispositif client fonctionnant comme un environnement de développement d'une application configurée pour exécuter un traitement prédéterminé, le dispositif client comprenant le dispositif de traitement d'informations selon la revendication 1 ;
et
un dispositif serveur, dans lequel
le dispositif serveur comprend :
une unité de stockage configurée pour stocker un programme de développement destiné à supporter le développement de l'application ;
une unité de génération de clé configurée pour générer, lorsqu'un nom pour une identification unique de l'application est reçu en provenance du dispositif client, une clé correspondant au nom, et pour authentifier la validité de l'application ; et
une unité de mise à disposition configurée pour intégrer la clé générée et le programme de développement et pour fournir la clé générée et le programme de développement au dispositif client.
